# EUROPEAN PATENT SPECIFICATION

(11) **EP 4 210 509 B1**
(45) Date of publication and mention of the grant of the patent: **16.10.2024**
(21) Application number: 21777223.5
(22) Date of filing: 08.09.2021
(51) Int. Cl.: A23N 12/08

(54) **COFFEE ROASTER**
KAFFEERÖSTER
APPAREIL DE TORRÉFACTION DE CAFÉ

(30) Priority: 08.09.2020 CH 11112020
(43) Date of publication of application: 19.07.2023
(73) Proprietor: Mikafi GmbH, 6005 Luzern (CH)
(72) Inventor: DISLER, Marius, 6005 Luzern (CH)
(74) Representative: Rentsch Partner AG
(86) International application number: PCT/EP2021/074720
(87) International publication number: WO 2022/053522

(56) References cited:
- KR-A- 20130 087 157
- KR-A- 20130 087 157
- US-A1- 2016 183 586
- US-A1- 2016 183 586
- US-A1- 2016 345 620
- US-A1- 2016 345 620
- US-A1- 2019 320 703
- US-A1- 2019 320 703

## Description

### FIELD OF THE INVENTION

The present invention relates to the field of coffee roasters as well as the roasting of coffee beans.

### BACKGROUND OF THE INVENTION

The roasting of coffee beans is known to be a highly complex process that depends on a plurality of parameters and influence factors and generally requires considerable skills and experience. For roasting coffee beans, coffee roasters in the form of large industrial equipment is known and mostly used. In addition, smaller coffee roasters are available for roasting small amounts of coffee beans of, e.g. up to 1 kg or a few kilograms, and are used for example in shops and in some private households. Especially those smaller coffee roasters, however, still tend to require substantive skills from the user which are not present in many cases and further require substantial attention by a user or operator to provide satisfying results.

Further, coffee roasters generally produce hot and smelly exhaust air that calls for use in a well ventilated environment and/or for costly and expensive exhaust air treatment. Further, the cooling of the coffee beans subsequent to the roasting is often unsatisfying, resulting in suboptimal roasting result.

It is an overall objective to improve the state of the art regarding coffee roasting in particular by small coffee roasters that are suited for use e.g. in a shop, cafeteria or the like, while producing roasted coffee beans of high quality.

Favorably, some or more of the before-mentioned problems and drawbacks are overcome at least in part. Further particular advantages that are present in a number of embodiments are discussed in their respective context.

US 2019/320703 A1 discloses a coffee roaster of the prior art.

### SUMMARY OF THE INVENTION

In an aspect, the overall objective is achieved by a coffee roaster for performing a coffee bean roasting process. The expression "coffee bean roasting process" may, in addition to the roasting process as such, also include further processes or methods, in particular the after-treatment of cooling the coffee beans subsequent to the roasting process as such, in particular by way of a cooling unit, and/or the treatment of exhaust air as well as the removal of chaff, in particular by an exhaust air treatment unit, as well as the filling of raw coffee beans and the removal of roasted coffee beans. The expression "roasting process as such" refers directly to the roasting of the coffee beans inside a drum as explained further below.

It is noted that a cooling unit as well as an exhaust air treatment unit as described further below are described in this document in the context of particular embodiments and overall designs of a coffee roaster. They may, however, also be used in the context of coffee roasters of different design.

In a further aspect, the overall objective is achieved by a coffee roasting system. The coffee roasting system includes one or more coffee roasters that are designed for operatively coupling with a remote computer system.

In a further aspect, the overall objective is achieved by a method of roasting coffee beans and/or of brewing coffee, wherein the method includes using a coffee roaster and/or a coffee roasting system according to an embodiment of the present disclosure.

A coffee roaster in accordance with the present invention includes a roasting unit. The roasting unit includes a drum wherein the drum comprises a drum body with a thermally conductive rear wall and the drum body further comprises a drum inlet and a drum outlet. The drum further comprises a removable front wall. An inner drum space is delimited by the rear wall, the front wall and the circumferential wall. The roasting unit further includes a drum rotor, wherein the drum rotor is rotatably arranged inside the drum and a drum rotor drive in operative coupling with the drum rotor to rotate the drum rotor. In an embodiment, the front wall is transparent.

Depending on the embodiment, the drive is fixedly attached to and/or part of the drum. Alternatively, the drive is separate from the drum. The drive may comprise an electromotor. It is noted that the here-described design and in particular a removable and optionally transparent front wall causes a number of constrains and restrictions on the overall design of the coffee roaster that are not present in typical prior art devices. In particular, the front wall being transparent (typically from glass as explained further below) and/or removable has the consequence that the front wall is not available for the attachment of heaters, sensors, and openings/apertures for filling and removing coffee beans, feeding and withdrawal of hot air, and the like, as discussed further below in more detail. Instead, all such features generally need to be arranged at the drum body and in particular the rear wall of the drum.

The roasting unit further includes a hot air supply, wherein the hot air supply includes an air heater and a positive pressure device to feed hot air into the drum. The roasting unit may further include an exhaust air withdrawer to withdraw exhaust air from the drum. The exhaust air withdrawer may include a negative pressure device.

The roasting unit further includes a drum heater, wherein the drum heater is thermally coupled with the rear wall to heat the rear wall.

The coffee roaster further includes a sensor arrangement. The sensor arrangement includes a roasting bean temperature sensor, wherein the roasting bean temperature sensor is configured to measure a roasting bean temperature of coffee beans positioned inside the drum and to provide a roasting bean temperature signal. The roasting bean temperature sensor may, for example, be realized as PT100 temperature sensor or an infra-red temperature sensor.

The coffee roaster further includes a control unit for controlling execution of the coffee bean roasting process by the coffee roaster. The control unit is configured to receive a control input signal as a function of time, wherein the control input signal includes the roasting bean temperature signal. The control unit is further configured to automatically generate a control output signal as a function of time in dependence of the control input signal. The control output signal includes a drum heater control signal, a drum rotor drive control signal and at least one of an air heater control signal and/or a positive pressure device control signal, thereby controlling operation of the drum heater, the drum rotor drive and at least one of the air heater and/or of the positive pressure device to roast the coffee beans inside the drum according to a pre-determined selected roasting profile. The selected roasting profile may include a desired roasting bean temperature as a function of time and a target roasting bean temperature.

Via the drum heater control signal, operation of the drum heater may be controlled. Via the drum rotor drive control system, operation of the drum rotor drive may be controlled. Via the air heater control signal, operation of the air heater may be controlled. Via the positive pressure device control signal, operation of the positive pressure device, in particular a supply fan as discussed further below, may be controlled.

The control unit is further configured to determine if an end-of-roasting condition is met, wherein the end-of roasting condition includes that the coffee beans inside the drum have the target roasting bean temperature.

The roasting of the coffee beans is achieved by a combination of direct heat that is transferred to the coffee beans via the rear wall and hot air, which is particularly favorable. During the roasting, the drum rotor drive is generally activated and the drum rotor rotates, such that the coffee beans inside the drum are continuously mixed and roasted in a uniform manner.

Controlling operation of the drum heater may in particular include controlling the heating power of the drum heater. Favorably, the heating power of the drum heater may be controlled in a substantially continuous manner. In further embodiments, however, the heating power may be controlled in a number of discrete steps and/or may only be switched on and off via the drum heater control signal.

Controlling operation of the drum rotor drive may in particular include controlling the rotational speed of the drum rotor drive and accordingly of the drum rotor. Favorably, the rotational speed of the drum rotor drive may be controlled in a substantially continuous manner. In further embodiments, however, the rotational speed of the drum rotor drive may be controlled in a number of discrete steps and/or may only be switched on and off via the drum heater control signal. Generally, the drum rotor drive may also be switched off via the drum rotor drive control signal.

Controlling operation of the air heater may in particular include controlling the heating power of the air heater e.g. by switching on/off and/or regulating the heating power continuously or in a number of discrete steps.

Controlling operation of the positive pressure supply and optionally of the negative pressure device as discussed further below generally is associated with controlling a pressure difference between an inlet side and an outlet side and/or air flow through the positive pressure device and negative pressure device, respectively. In embodiments, where the positive pressure device includes a supply fan, controlling operation of the positive pressure supply may in particular include controlling a rotational speed of the supply fan. Similarly, in embodiments where the negative pressure device includes a withdrawerfan, controlling operation of the negative pressure device may particularly include controlling the rotational speed of the withdrawer fan. Operation of the positive pressure supply or the negative pressure device, respectively, may favorably be controlled in a substantially continuous manner, e.g. by controlling the rotational speed of a supply fan or withdrawer fan, respectively in a continuous manner. In further embodiments, the positive pressure supply and/or the negative pressure supply may only be switched on and off via the corresponding control signal, without continuous regulation, regulation of the rotational speed, or may be controlled in a number of discrete steps.

A coffee roaster according to the present disclosure has a number favorable properties that make it particularly suited for use directly in shops, cafeterias, and the like, as well as generally on demand roasting for end users or consumers. While the coffee roaster in accordance with the present disclosure may be designed for handling and roasting different amounts of coffee beans, it may be typically designed for roasting about 0.5 kg to 1.5 of coffee beans and the inner drum space may accordingly be designed to receive about 0.5 kg to 1.5 of coffee beans. In contrast to roasting devices as typically used by commercial coffee roasters which are designed for the efficient roasting of large amounts of coffee beans in a uniform and generally time-efficient manner, a coffee roaster in accordance with the present invention may be favorably used for the roasting of substantially smaller amounts of coffee beans in a flexible manner. The type of coffee beans as well as the roasting process and its parameters are favorably easily changeable from batch to batch. Additionally, a coffee roaster in accordance with the present invention is suitable for use directly in shops and cafeterias as the exhaust air has been cooled, filtered, and/or passed through a catalyzer such that it is unproblematic from a health and safety perspective. Further, the coffee roaster is designed such that an operating noise is within acceptable limits.

Since the coffee bean roasting process is carried out automatically under control of the control unit, little (if any) experience and coffee roasting skills are required in order to obtain the desired result as defined by the pre-determined selected roasting profile. Also, substantially no manual observation and handling is needed during the roasting, which is particularly favorable for use for example in shops or cafeterias. Further advantageous features and embodiments in the context of the type of application are described further below in their respective context of the general description as well as the description of the figures.

Measuring the coffee bean temperature (potentially together with other properties and characteristics as explained further below) has been found to be particularly suited for controlling the roasting process and automatically determining when the desired state is reached and the roasting process is completed.

In a control context the desired roasting bean temperature as a function of time which is provided as part of the selected roasting profile may be considered as a time-dependent set value respectively as a reference variable. The control output signal respectively its components may be considered as correcting respectively actuating variables. The target roasting bean temperature as well as one or more optional further target values, in particular a target roasting bean color as discussed further below define the end of roasting condition as a stop criterion for ending the roasting process.

Besides the rear wall, the drum body includes a circumferential wall that connects the rear wall with the front wall. The circumferential wall may optionally be formed integrally with the rear wall or separate. Favorably, the circumferential wall is also thermally conductive and may be made from the same material respectively designed in the same manner as the rear wall, which, however, is not mandatory.

The drum has a longitudinal drum axis that is a central axis respectively symmetry axis and extends through the centers of the rear wall and the front wall. In an operational configuration, of the coffee roaster, the longitudinal drum axis is horizontal, traverse respectively perpendicular to the direction of gravity. The drum rotor has a rotor axis that coincides respectively is aligned with the longitudinal drum axis as common axis.

Further, the drum favorably has a drum diameter that is substantially larger than the drum length respectively extension along the drum axis respectively the distance between the parallel rear wall and front wall. Consequently, the drum is favorably disk-shaped.

All parts of the coffee roaster that come into contact with the coffee beans before, during, and after the roasting process are made from food-grade materials. This is particularly the case for the drum and the drum rotor which must further be designed to withstand the temperatures of typically beyond 400°C that occur during the roasting.

In an embodiment, the rear wall is realized as a sandwich comprising an inductively heatable outer layer in thermal contact with the drum heater, a core layer of aluminum and a food-grade inner layer (coffee bean contacting side, opposite to the outer layer). This design is particularly favorable in designs where the drum heater is designed as inductive heater in thermal contact with the outer layer. The core layer distributes the heat substantially evenly and with low loss. Instead of aluminum, other suited materials of high thermal conductivity, such as copper, may be used for the core layer. The food-grade inner layer may, for example, be made from chromium steel or stainless steel and may be comparatively thin respectively be realized as coating. The drum rotor as well as the circumferential wall of the drum body are also made off or least coated with a food-grade material. In particular, the circumferential wall may be of the same design as the rear wall and, for example, also be realized as sandwich as mentioned before. Atypical thickness of each of the layers may for example be between 1 mm and 5mm. The expression "outer layer" refers to an outside of the rear wall, pointing away from the inner drum space, while the inner layer defines a delimiting surface of the inner drum space.

The front wall is favorably made from inert and food-grade glass. The front wall is generally removably attached to the drum body in a way that allows easy removal by an operator, optionally without requiring tools, thereby allowing easy removal for cleaning as well as maintenance purposes. Optionally, an inner surface of the front wall may be coated with a heat reflecting and transparent coating as generally known in the art, thereby, reducing undesired thermal radiation and limiting the temperature of the generally user-accessible outer surface of the front wall. In an operational state where the front wall is attached to the drum bays, the connection between drum bays and front wall is favorably both airtight and or respectively smell tight.

In embodiments where the front wall is not transparent, it may be made from generally the same materials as the rear wall and/or the circumferential wall, for example from food-grade stainless steel.

In further designs, the drum heater is not designed as inductive heater but, for example, as resistive heater, a Peltier element heater or an infra-red heater. In such designs, the before-described sandwich construction with an outer layer, a core layer and an inner layer may not be necessary respectively may be modified. In particular, in embodiments where the drum heater is a resistive heater, the rear wall may be realized as sandwich comprising two layers. One layer is an outer layer of aluminum or other material of high thermal conductivity, in which the heating element is embedded. The other layer is an inner layer of food-grade material as explained before.

The drum inlet is arranged above the longitudinal drum axis. Typically, the drum inlet is arranged at the rear wall in proximity to the connection to the circumferential wall. Alternatively, however, the drum inlet may also be arranged in an upper area of the circumferential wall. The drum inlet is or includes an opening via which green coffee beans may be put into the drum for subsequent roasting. Favorably, the inlet opening is connected to or connectable to a hopper into which the coffee beans to be roasted may be filled, typically manually. Such hopper may optionally be part of the coffee roaster. In particularly favorable embodiments, the drum inlet is connected with the hopper via a drum inlet shutter that may be arranged between the hopper and the drum inlet or may be arranged at the drum inlet. The hopper is favorably arranged above the drum inlet such that coffee beans can be transferred from the hopper into the drum by way of gravity.

The drum outlet is arranged below the longitudinal drum axis. Typically, the drum outlet is arranged at the rear wall in proximity to the connection to the circumferential wall. Alternatively, however, the drum outlet may also be arranged in a lower area of the circumferential wall. The drum outlet is or includes an opening via which roasted coffee beans may be removed from the drum. In particularly favorable embodiments, a drum outlet shutter is arranged at the drum outlet as explained further below. In an embodiment that is discussed further below in more detail, the drum outlet is further configured to receive cooling air from a cooling container when cooling the roasted coffee beans. In such design, the drum outlet is favorably designed for air tight respectively gastight coupling with the cooling container, in particular the cooling container inlet. The drum may therefore be rapidly cooled at the same time as the coffee beans are cooled, returning the drum to a temperature where it may safely be handled and/or where it may receive further unroasted beans for a subsequent roasting process.

For feeding hot air into the drum, the drum body, favorably the rear wall, comprises a hot air supply opening as interface between the hot air supply and the inner drum space to establish a fluidic communication respectively fluidic connection of the hot air supply and the inner drum space. In some particular embodiments, the hot air supply opening is identical respectively integral with the drum outlet.

The heating element of the hot air supply is typically realized as resistive heating element, but may in principle be also realized differently, in particular as inductive heating element or gas heating element, Peltier element, or the like. Via the positive pressure device, hot air is actively blown respectively pressed into the drum. In typical embodiments, the positive pressure device is realized as supply fan respectively supply blower. In alternative embodiments, however, the positive pressure device is realized or includes, e.g. a pressurized air tank, a compressor, or the like. Flow control elements, such as one or more valves, throttles and the like may be present in some embodiments. The positive pressure device may generally be coupled to the inner drum space via appropriate tubing for connecting with the hot air supply opening.

For withdrawing exhaust air from the inner drum space, the drum body, favorably the rear wall, comprises an exhaust air withdraw opening as interface between the inner drum space and the exhaust air withdrawer to establish a fluidic communication of the exhaust air withdrawer and the inner drum space. Like the inlet opening, the exhaust air withdraw opening is favorably arranged in an upper region of the drum body, above the longitudinal drum axis. Favorably, a coffee bean retainer element, in particular, in form of a perforated plate or a mesh is arranged at the exhaust air withdraw opening. The openings of the coffee bean retainer element are dimensioned such that it can be passed by the exhaust air without substantive resistance and also chaff that is separated from the coffee beans during roasting can pass, but coffee beans are retained within the drum.

The exhaust air withdrawer includes a negative pressure device to actively withdraw the exhaust air by way of suction. In typical embodiments, the negative pressure device is realized as withdrawer fan respectively withdrawer blower. In alternative embodiments, however, the negative pressure device is realized by a vacuum pump, such as a water jet pump. The negative pressure device may in principle be directly coupled to the inner drum space, using, e.g., appropriate tubing for connecting with the exhaust air withdraw opening. In other and particularly favorable embodiments however, the negative pressure device is fluidically coupled with the inner drum space via an exhaust air treatment unit as intermediate element, as explained further below in more detail. Further, the exhaust air withdrawer may include a chimney which may in particular be arranged fluidically downstream of the negative pressure device, e.g. a withdrawer fan. It is noted that the negative pressure device may also be considered as part of an exhaust air treatment unit as discussed further below in the context of particular embodiments.

In an embodiment that is discussed further below, the exhaust air withdrawer is further configured and used in operation for withdrawing respectively removing cooling air that is used for cooling the roasted coffee beans in a cooling unit.

In an embodiment, the sensor arrangement further includes one or more further sensors as explained in the following:
The sensor arrangement may include a roasting bean color sensor, wherein the roasting bean color sensor is configured to measure a roasting bean color of the coffee beans positioned inside the drum and to provide a roasting bean color signal, wherein the control input signal includes the roasting bean color signal. The roasting bean color sensor is typically an optical sensor as known in the prior art, or may be realized e.g. by a camera in combination with corresponding image processing logics and/or image processing firmware/software code. The roasting bean color sensor may in particular be arranged in respectively at the circumferential wall or rear wall. The roasting bean color sensor as such is favorably not arranged inside the drum, but is configured the roasting bean color of the coffee beans via a window or aperture in the circumferential wall or rear wall. In embodiments including a roasting bean color sensor, the end of-roasting condition may include the coffee beans inside the drum having a target roasting bean color.

The sensor arrangement may include a rear wall temperature sensor, wherein the rear wall temperature sensor is configured to measure a rear wall temperature of the rear wall and to provide a rear wall temperature signal, wherein the control input signal includes the rear wall temperature signal.

The sensor arrangement may include a drum air temperature sensor, wherein the drum air temperature sensor is configured to measure a drum air temperature inside the drum and to provide a drum air temperature signal, wherein the control input signal includes the drum air temperature signal.

The sensor arrangement may include an inlet air temperature sensor, wherein the inlet air temperature sensor is configured to measure an inlet air temperature of hot air that is fed into the drum and to provide an inlet air temperature signal, wherein the control input signal includes the inlet air temperature signal.

The sensor arrangement may include an air humidity sensor, wherein the air humidity sensor is configured to measure a withdrawn air humidity of air that is withdrawn from drum and to provide an air humidity signal, wherein the control input signal includes the air humidity signal.

The sensor arrangement may include an airflow sensor, wherein the air flow sensor is configured to measure a withdrawn airflow rate of air that is withdrawn from the drum and to provide an air flow signal, wherein the control input signal includes the air flow signal.

The sensor arrangement may include a crack detection sensor, wherein the crack detection sensor is configured to detect the occurrence of a first and/or second crack of coffee beans during roasting, and provide a crack detection signal, wherein the control input signal includes the crack detection signal. The crack detection sensor is configured and arranged to detect the occurrence of the first and/or second crack based on the mechanical waves that result from a crack. The detected mechanical waves may be acoustic waves and the crack detection sensor may be a microphone. Alternatively, or additionally, the mechanical waves may be structure-born and be detected at the drum body, in particular the rear wall and/or the circumferential wall. In such embodiments, the crack detection sensor may be an acceleration sensor or vibration sensor, for example on piezo-resistive or capacitive basis.

The here-described sensors are found to provide particular useful information for monitoring and/or supervising the roasting process in the context of an automated setup, and some or all of them may accordingly be used. Further sensors that may be present in some embodiments are discussed further below in their respective context.

In an embodiment, the sensors comprise one or more pressure sensors including, for example, an air outlet pressure sensor and/or and air inlet pressure sensor. A given pressure sensor may measure absolute, relative, and/or differential pressure. The one or more pressure sensors are arranged to measure air pressure in one or more locations in the coffee roaster, in particular the air pressure of the air flowing into and/or out of the drum. For example, the sensors comprise a pressure sensor arranged upstream of the drum configured to measure a relative pressure of the inlet air with respect to ambient pressure. Additionally, the sensors may comprise a pressure sensor arranged downstream of the drum configured to measure a relative pressure of the outlet air with respect to ambient pressure. The one or more pressure sensors are each configured to provide a control signal indicating a measured pressure. Using the control signal indicating the pressure sensor, a temperature difference can be determined between two or more locations can be determined which is, for example, indicative of a flow rate of air between the two locations.

In an embodiment, the control output signal includes a negative pressure device control signal, thereby controlling operation of the negative pressure device of the exhaust air withdrawer. During roasting, the positive pressure device and the negative pressure device may be favorably controlled in a coordinated manner such that the air flow of hot air that is fed into respectively enters the drum corresponds to the air flow of exhaust air that is withdrawn from respectively exits the drum. In this way, a continuous flow is achieved and any repulsion is prevented. In embodiments including a cooling unit where the cooling air is, subsequent to cooling roasted coffee beans transferred respectively fed into the drum and withdrawn by the exhaust air withdrawer, the exhaust air withdrawer, for example a withdrawer fan, may be controlled to operate at generally high and potentially maximum power. In this way, it is ensured that the air is safely withdrawn from the drum via the air withdrawer and no repulsion occurs.

In an embodiment, the coffee roaster includes a drum inlet shutter, wherein the drum inlet shutter is arranged to alternatively open or close the drum inlet. In such embodiment, the selected roasting profile may include a selected pre-roasting condition, and the control unit may be configured to generate a pre-roasting control output signal as part of the control output signal and to determine, based on control input signal, if the selected pre-roasting condition is met and to control the drum inlet shutter to open the drum inlet upon the selected pre-roasting condition being met. The control unit is further configured to control the drum inlet shutter to close the drum inlet upon the coffee beans being transferred respectively filled into the drum and maintain the drum inlet shutter closed during roasting. The drum inlet shutter is accordingly controlled to only temporary open the drum inlet for filling respectively transferring coffee beans into the drum, but to maintain it closed otherwise.

The drum inlet shutter is arranged at the drum inlet or between the hopper and the drum inlet, such that coffee beans may accordingly be filled into the drum respectively the inner drum space in a configuration where the coffee bean inlet shutter is open. In a configuration where the inlet shutter is closed, the passage from the hopper into the drum is blocked. The inlet shutter is favorably designed to hermetically seal the passagefrom the inner drum space to the hopper in an air tight way. Thereby, exhaust air is prevented from leaving the inner drum space via the inlet opening during roasting, but only leave the inner drum space via the exhaust air withdrawal opening. The inlet shutter further includes an inlet shutter actuator, such as an electromagnet or a motor in operative cooling with the control unit.

The pre-roasting condition typically includes a drum air temperature and a drum body temperature, in particular a rear wall temperature, that shall be present at the beginning of the roasting in dependence of the desired roasting. In another embodiment, it only includes a drum body temperature that shall be present at the beginning of the roasting.

An embodiment with a controlled inlet shutter is favorable regarding both convenience and quality of the roasting process. A user may fill raw coffee beans into the hopper substantially at any point in time, e.g. after switching on the coffee roaster. The coffee beans in the hopper are transferred into the drum by opening the drum respectively the inlet shutter automatically if the pre-roasting condition is met. The time until the pre-roasting condition is met is also referred to as pre-heating.

During pre-heating, the drum rotor drive and the drum rotor are generally controlled to operate respectively to ensure a uniform temperature distribution within the drum. Further, the control unit is favorably configured to control the drum rotor drive during the transfer of the coffee beans from the hopper into the drum respectively while the drum inlet opening is open to rotate at a generally reduced speed, thereby ensuring that the drum rotor transports the coffee from the drum inlet opening into the inner drum space and the drum inlet opening is not blocked. When the drum inlet opening is again closed by the drum inlet shutter, the roasting starts and the drum rotor drive is controlled in accordance with the selected roasting profile. The pre-heating may include a holding phase following the pre-roasting condition being met where the relevant parameters, in particular the rear wall temperature respectively drum air temperature, are maintained constant before opening the inlet shutter and starting the roasting.

In an embodiment, the coffee roaster includes a drum outlet shutter, wherein the drum outlet shutter is arranged to alternatively open or close the drum outlet. In such embodiment, the control unit may be configured to control the drum outlet shutter to open the drum outlet upon the end-of-roasting condition being met.

This type of embodiment has the particular advantage that the coffee beans automatically leave the drum upon the end-of roasting condition being met and in particular the coffee beans have the target roasting bean temperature, and are not further roasted in an uncontrolled and undesired manner due to the hot rear wall and the hot air inside the drum.

The drum outlet shutter may include a flap, similar to the drum inlet shutter as explained before, but may also be, e.g. a movable perforated plate or a slide. The drum outlet shutter further includes an outlet shutter actuator, such as an electromagnet or a motor in operative cooling with the control unit.

In a configuration where the drum outlet is open, roasted coffee beans may be removed from the inner drum and fall out of the drum favorably by way of gravity. During this process, the drum rotor drive is favorably controlled to be active and rotate the drum rotor, which pushes the coffee beans out of the inner drum space.

In an embodiment, the coffee roaster includes a cooling unit. It is noted, however, that the cooling unit according to the present disclosure may be realized and used in the context of other types of coffee roasters as well.

The cooling unit includes a cooling container with a cooling container inlet. The cooling container inlet may be coupled with the drum outlet via the drum outlet shutter.

The cooling unit may further include a cooling medium supply. The cooling medium supply may include a cooling air supply, wherein the cooling air supply is fluidically coupled with an inner cooling container space to feed cooling air into the cooling container. Alternatively, or additionally, the cooling medium supply may include a cooling water supply.

The cooling water supply may include a nozzle arrangement, wherein the nozzle arrangement is configured for spraying cooling water onto coffee beans inside the cooling container.

Via the cooling unit, the coffee beans can be cooled down in a well-defined and controlled manner. In particular, it is generally desirable to cool the coffee beans down quickly, without, however, wetting them. This may be achieved in embodiments which include both a cooling air supply and a cooling water supply. In some designs, however, either may be sufficient.

In an embodiment, the cooling unit may further include a cooling rotor drive in operative coupling with the cooling rotor to rotate the drum rotor. Further in an embodiment, the cooling container may include a cooling container outlet. In alternative embodiments, no dedicated cooling container outlet is present and/or no cooling rotor and cooling rotor drive may be present.

The cooling unit may in particular be coupled with the drum outlet opening via the drum outlet shutter, such that the drum outlet shutter alternatively connects the cooling unit with the drum space if the drum outlet opening is open or disconnects the cooling unit from the drum space if the drum outlet opening is closed and the drum outlet shutter may accordingly also be considered respectively serves as cooling container inlet shutter. Consequently, roasted coffee beans may be removed from the drum and transferred to the cooling container only if the drum outlet shutter is open.

A cooling air supply may in particular include a cooling fan respectively cooling blowerthat is coupled to a cooling container inner space to actively blow respectively press air into the cooling container inner space. Rather than a cooling fan, the cooling air supply may, e.g. include an air pump or a compressor to force air into the cooling container inner space. In typical embodiments, the cooling air temperature is generally the ambient air temperature. Optionally, however, the cooling air supply may include a dedicated cooling device for cooling down the cooling air.

Via a cooling water supply, the coffee beans shall not be actually wetted. Therefore, the nozzle arrangement favorably includes a plurality of nozzles that create an atmosphere of mist inside the cooling container. The nozzle arrangement is favorably positioned at the top respectively above the cooling container. The cooling water supply may include a cooling water pump in order to provide the cooling water to the nozzle arrangement, and/or may operate with the line pressure of a general water supply. Further, the cooling water supply may include a cooling water tank that is arranged above the cooling container, such that the water is forced from the cooling water tank into the nozzles by way of gravity. The cooling water supply may include a nozzle control valve that is operatively coupled to and controlled by the control unit via a nozzle control valve control signal. The nozzle control valve control signal may be part of the control output signal as mentioned before. Such nozzle control valve may be a shut-off vale or a continuously control valve for continuously controlling the water supply to the nozzle arrangement. In order to prevent the coffee beans to be actually wetted, the cooling water supply is favorably controlled to be activated only for a coffee bean temperature above a wetting temperature threshold, in particular 100°C, and to be switched off, in particular by fully closing the nozzle control valve, upon the coffee bean temperature falling below the wetting temperature threshold, as indicated by the cooling bean temperature sensor.

In a particular embodiment including a cooling unit, the cooling unit may further include a cooling container outlet shutter, wherein the cooling container outlet shutter is configured to alternatively open or close a cooling container outlet. The control unit of such embodiment may be configured to control the cooling container outlet shutter to close the cooling container outlet during cooling and to open the cooling container outlet upon cooling being completed.

The cooling container outlet shutter may include a flap and a cooling container outlet shutter actuator, such as an electromagnet or a motor in operative cooling with the control unit. When the outlet shutter opens, the coffee beans may fall into an outlet container. The control unit is favorably designed to control the cooling container outlet shutter to open the cooling container outlet only for removal of the coffee beans from the cooling container but to be closed otherwise and in particular during the cooling.

During the cooling of coffee beans, the coffee beans may be continuously moved by the cooling rotor to ensure a uniform exposure of the coffee beans to the cooling medium and/or cooling media, in particular cooling air and/or cooling water as mentioned before.

Operation of a cooling rotor drive as well as a cooling water supply and/or the cooling air supply may be controlled by the control unit which may be configured to generate a cooling rotor drive control signal as well as a cooling air supply control signal and/or a cooling water supply control signal. During cooling, the cooling air supply and/or cooling water supply may be controlled to operate continuously and in a constant manner. Favorably, however, the cooling air supply and/or cooling water supply are controlled in a varying manner via time-varying control signals as a function of time, thereby varying the cooling by air and/or cooling water over time during the cooling. Control parameters for generating the cooling rotor drive control signal as well as the as the cooling air supply and/or a cooling water supply as a function of time may be stored as fixed parameters by the control unit. Favorably, however, control parameters for generating one or more of the cooling rotor drive control signal as well as the as the cooling air supply and/or a cooling water supply may be part of the selected roasting profile and accordingly vary in dependence of the selected target roasting profile. The cooling rotor drive control signal as well as the cooling air supply control signal and/or cooling water supply control signal may be part of the control output signal generated by the control unit.

Further, the control unit may be configured to switch the cooling rotor drive on and off in a binary manner. In alternative embodiments, the control unit may be configured to control operation of the cooling air supply and/or the cooling water supply in a varying manner during the cooling, as a function of time, thereby varying the cooling by air and/or cooling water over time during the cooling.

When the optional cooling container outlet shutter opens for removing the coffee beans from the cooling container and transferring them to the outlet container as explained before, a cooling rotor drive is favorably active and the cooling rotor rotates, thereby ensuring that all coffee beans are moved to the cooling container outlet.

In further embodiments of the cooling unit with a cooling rotor and a cooling rotor drive, the cooling rotor is not arranged inside the cooling container. Instead, the cooling rotor may be formed integrally with the cooling container. In such embodiment, the cooling container is rotatable and coupled with the cooling drive to rotate the cooling container. In such embodiment, the cooling container may comprise stirring elements such as lamellas or ribs that are arranged inside an inner space of the cooling container and stir the coffee beans when the cooling container rotates.

In an embodiment, the cooling is considered to be completed upon an end-of-cooling condition being met. The end-of cooling-condition being met may in particular be detected based on one or more cooling sensor signals, with the one or more cooling sensor signals being generated by one or more corresponding cooling sensors of the cooling unit. In particular, the cooling unit may include a cooling bean temperature sensor, wherein the cooling bean temperature sensor is configured to measure a cooling bean temperature of coffee beans inside the cooling container and provide a corresponding cooling bean temperature signal, wherein the end-of-cooling criterion includes the cooling bean temperature reaching or falling below a pre-determined target cooling bean temperature. Further, the cooling unit may additionally or alternatively include a cooling bean color sensor, wherein the cooling bean color sensor is configured to measure a cooling bean color of coffee beans inside the cooling container and provide a corresponding cooling bean color signal, wherein the end-of-cooling criterion includes the cooling bean color assuming a pre-determined target cooling bean color. The end-of cooling-condition, in particular, the target cooling bean temperature and/or target cooling bean color may be fixed ins some embodiments. Favorably, however, they are part of the selected roasting profile. The one or more cooling sensor signals, in particular a cooling bean temperature signal and/or a cooling bean color signal may be part of the control input signal and the one or more cooling sensors, in particular a cooling bean temperature sensor and/or a cooling bean color sensor may be part of the sensor arrangement. In further embodiments, cooling of the coffee beans is time-controlled and the end-of cooling criterion is the lapse of a pre-determined cooling time span after beginning of the cooling. Upon the cooling being completed, the control unit may provide a corresponding indication and/or control a cooling container outlet shutter to release the coffee beans.

In a particular embodiment including a cooling unit, the cooling container is fluidically coupled, in particular in a fluidically tight manner, with an inner drum space of the drum, thereby enabling a transfer of cooling air from the cooling container into the drum and a withdrawal of the cooling air from the drum by the exhaust air withdrawer. Such design is particularly favorable if only cooling air, but no cooling water is foreseen as cooling medium. In such design, the exhaust air withdrawer serves the additional purpose of withdrawing the cooling air during cooling in a controlled manner.

The fluidic coupling of cooling container and drum space may in particular be via the drum outlet. In such design, the drum outlet serves for removing the roasted coffee beans from the drum and transferring them into the cooling container, and subsequently, for removing cooling air from the cooling container and transferring respectively feeding it into the drum. It is noted, that no coffee beans are present in the drum in this stage. The outlet shutter is generally controlled to be open during cooling in such an embodiment. In another variant, however, a separate fluid coupling is foreseen between the drum and the cooling container for removing the cooling air from the cooling container and transferring respectively feeding it into the drum.

In an embodiment, the cooling container may be a removable tray that is configured to be removed upon cooling of the beans being completed, with the beans being in the tray. The cooling container may be arranged inside a drawer. In such design, a dedicated cooling container outlet shutter may be omitted. The tray may in particular be open at an upper side and/or may have a removable or openable cover. An opening may be provided in such cover for coupling with the drum outlet. Alternatively, the tray is open at its upper side. A fluidically tight coupling as mentioned before can be achieved by way of a sealing which may be part of the cooling container, e.g. tray, and/or a housing of the coffee roaster. The sides and/or the bottom of the tray are perforated with air holes dimensioned such that beans cannot pass through. The tray is configured such that the perforated sides and/or bottom of the tray do not fully touch any adjacent surfaces, respectively, thereby allowing unobstructed passage of air into the tray through at least some of the air holes. In an embodiment the cooling container is a bean tray as discussed further below. The drawer may comprise a scale configured to measure a weight of the tray, such that a weight of the beans in the tray can be determined. Further, the drawer may comprise an insert configured to receive cooling air from the cooling air supply and direct the cooling air into the tray. In particular, the insert is configured to direct the cooling air such that it flows into the tray through the perforations, thereby cooling the beans. In a preferred example, the cooling container, in particular the insert, comprises a seal configured to achieve a fluidically tight coupling to the cooling air supply.

In an embodiment, the coffee roaster includes an exhaust air treatment unit. It is noted, however, that an exhaust air treatment unit according to the present disclosure may be realized and used in the context of other types of coffee roasters as well. In a particular embodiment, the exhaust air treatment unit may include a water tank, the water tank being designed to be filled with water up to a filling level, wherein the water tank has a water tank air inlet and a water tank air outlet. The water tank air inlet is fluidically coupled to the exhaust air withdraw opening and accordingly the inner drum space. The water tank air inlet is arranged below the filling level of the water tank. The water tank air outlet is arranged above the filling level. An exhaust air treatment unit may further include a fresh water supply for supplying fresh water into the water tank and a waste water drain for draining waste water from the water tank.

The withdrawer fan as explained before is favorably arranged fluidically downstream of the water tank and fluidically coupled to the water tank air outlet. The water tank is accordingly fluidically arranged between the drum and the withdrawer fan.

In operation, the withdrawerfan generates an under pressure respectively suction pressure in the air volume above the filling level and at the same time agitates the water. Via the coupling with the inner drum space, exhaust air is suck into the water tank and enters the water tank below the filling level due to the arrangement of the water tank air inlet, and the water dissolves and accordingly removes smoke and its components from the exhaust air and at the same time cools the exhaust air. The cooled down exhaust air rises to the water surface (as defined by the filling level) in the form of bubbles and is sucked off by the withdrawer fan. Inside the water tank, and generally below the filling level, a bubble enhancer may be arranged. The bubble enhancer may be realized by a perforated plate that substantially extends over the whole lateral surface area of the water tank. The bubble enhancer divides larger air respectively gas bubbles into smaller ones, thereby enhancing the smoke removal and cooling efficiency.

In some embodiments, the coffee roaster includes a chaff separator, the chaff separator generally serves the purpose of separating chaff from the exhaust air. In a particular embodiment including an exhaust air treatment unit with a water tank and a bubble enhancer as discussed before, the holes in a perforated plate serving as bubble enhancer are dimensioned sufficiently small to prevent the passing of chaff. In such embodiment, the chaff enters the water tank together with the exhaust air and remains in the water tank below the bubble enhancer until it is removed manually or by flushing of the water tank. In such embodiment, the bubble enhancer also serves as chaff separator.

In further embodiments, a chaff separator may be arranged between the drum and the water tank, in particular between the exhaust air outlet and the water tank air inlet. Such chaff separator may include a mechanical chaff retainer filter, such as a mesh or perforated plate that is passed by the exhaust air and prevents the chaff from passing. The chaff may be removed from the water tank along with the exhaust water when flushing, and/or may be removed manually.

In an embodiment, a bypass line is arranged such that the cooling air which leaves the drum during cooling bypasses the chaff separator. For example, a first end of the bypass line is connected upstream from the chaff separator, for example between the exhaust air outlet and the chaff separator. The first end of the bypass line is connected at a first coupling point, which may comprise one or more valves configured to direct cooling air, during cooling, through the bypass line. A second end of the bypass line is connected downstream from the chaff separator, for example between the chaff separator and a catalyzer described in more detail below. In particular, the second end of the bypass line is connected at a second coupling point between the chaff separator and a filter as described in more detail below.

In an embodiment, a water temperature sensor may be arranged in the water tank and below the filling level, for monitoring the water temperature. The water temperature sensor is operatively coupled with the control unit. The water temperature sensor provides a water temperature sensor signal that may be part of the input control signal. The control unit may be configured to determine, based on the water temperature control signal, when the water tank should be flushed and the water replaced. The control unit may in particular be configured to substantially continuously compare the water temperature with a water temperature threshold of, e.g. 70° Celsius. The water temperature reaching or exceeding the water temperature threshold indicates that the water tank should be flashed and the water inside the water tank be replaced.

For flushing the water tank and replacing the water, a fresh inlet supply and an exhaust water drain may be present as mentioned before and are coupled with the inner volume of the water tank via a fresh water supply valve and an exhaust water drain valve. The exhaust water supply valve and the exhaust water drain valve may be controlled by the control unit, thereby allowing an automated flushing of the water tank and water replacement as required.

To ensure that the water tank is, initially and subsequent to flushing, filled to the desired filling level, a filling level sensor may be provided in operative coupling with the control unit. The filling level sensor may in particular be a float gauge. Alternatively, the filling level sensor may be realized differently, e.g. by one or more electrical resistance based sensors, capacitive sensors, optical sensor, or the like. The control unit may be configured to e control the fresh water supply valve and/or the exhaust water drain valve in accordance with the signal provided by the filling level sensor. In particular, the control unit may be configured to control, subsequent to completely emptying the water tank, the fresh water inlet valve to open until the filling level sensor indicates that the desired filling level is reached. In further embodiments, the filling level sensor is water flow sensor that is arranged in or at the fresh water supply, and the control unit is configured to determine the filling level from the amount of water that is fed into the water tank.

In alternative embodiments, cleaning of the water tank and replacement of the water may be done manually, e.g. upon a user indication being provided if the water temperature reaches or exceeds the water temperature threshold. While a manual replacement of the water generally needs to be done between the roasting of coffee bean batches respectively when the coffee roaster is not operating, automated flushing and water replacement under control of the control unit as explained before may also be carried out during an ongoing roasting process.

Via the water tank air outlet, exhaust air is withdrawn from the water tank. In embodiments where the condenser and an exhaust air filter are present, the exhaust air filter is favorably arranged fluidically downstream of the condenser, such that the air, after leaving the water tank, is first dried and subsequently filtered. Via the filter, undesired smell and/or odor is removed from the exhaust air. In this way, the coffee roaster can be operated also within a room without the occurrence of undesired smell or odor and without requiring further exhaust air treatment devices.

In some embodiments of the exhaust air treatment unit, the exhaust air treatment unit includes a condenser, wherein the condenser is fluidically coupled with the water tank air outlet, such that air that is withdrawn from the water tank passes the condenser. As the exhaust air leaves the water tank, it is generally saturated with humidity which is removed by the condenser, thereby drying the exhaust air. The condenser accordingly serves as dehumidifier. Further, the condenser is favorably fluidically arranged between the water tank air outlet and the withdrawer fan, such that the exhaust air passes the condenser prior to the withdrawer fan.

In an embodiment of the exhaust air treatment unit, the exhaust air treatment unit includes an exhaust air filter. The exhaust air filter is fluidically coupled with the water tank air outlet, such that air that is withdrawn from the water tank passes the exhaust air filter. The exhaust air filter removes undesired odorous substances from the exhaust air. Further, the exhaust air filter is favorably fluidically arranged between the water tank air outlet and the withdrawer fan, such that the exhaust air passes the exhaust air filter prior to the withdrawer fan.

In an embodiment where both a condenser and an exhaust air filter are present, the condenser and the exhaust air filter may be arranged fluidically in series between the water tank air outlet and the withdrawer fan. The arrangement may in particular be such that the exhaust air passes the condenser first after exiting the water tank, followed by the exhaust airfilter.

In an embodiment including a chaff separator, the chaff separator may include a cyclone separator for separating the chaff and a chaff collector, e.g. in form of a drawer. The cyclone separator may be controlled by the control unit via a corresponding cyclone control signal. The cyclone separator may also be a passive cyclone separator, such that the shape of the device results in air which enters the cyclone circulating and maintaining a spiral-shaped air vortex (i.e. a cyclone). Particulates in the air leave the cyclone separator through an opening at the bottom of the cyclone separator, while air escapes from the cyclone separator through an opening at the top. Such a passive cyclone separator does not require any active elements to start or maintain the cyclone.

In an embodiment, the coffee roaster comprises a chaff separator temperature sensor configured to measure an air temperature inside the chaff separator directly or indirectly. The chaff separator temperature sensor can be arranged at the chaff separator, for example attached to a housing of the chaff separator, a temperature of the housing being indicative of an air temperature inside the chaff separator. The chaff separator temperature sensor can be arranged inside the chaff separator, thereby directly measuring the air temperature inside the chaff separator. The chaff separator temperature sensor can be arranged fluidically downstream of the chaff separator, thereby measuring the air temperature of air leaving the chaff separator. The chaff separator temperature sensor provides a control signal to the control unit. The control unit is configured to determine whether a fire is present in the coffee roaster depending on the temperature measured by the chaff separator temperature sensor. In particular, a temperature measured by the chaff separator temperature sensor exceeding a fire temperature threshold is considered indicative of a fire. Additionally, if the temperature measured by the chaff separator temperature sensor rises faster than a pre-determined temperature rise rate, this is considered indicative of a fire. The fire typically will burn the chaff in the chaff drawer.

In an embodiment, the coffee roaster comprises a fire extinguisher. The fire extinguisher is arranged such that it can extinguish a fire in the chaff separator, preferably including the chaff drawer. The fire extinguisher may be attached or connected to the chaff separator and/or the chaff drawer. Upon the control unit detecting a fire, the fire extinguisher is activated. The fire extinguisher may extinguish the fire using water, CO2, foam, or other fire extinguishing means. Additionally, the control unit may be configured to generate an alarm to alert a user of the coffee roaster of the fire, for example by generating an alarm signal which is transmitted to an acoustic transducer to alert the user. Further, the alarm signal may be connected to lighting elements of the coffee roaster to visually indicate a fire condition. Further, the control unit may be configured to turn off all heating elements and to reduce the air flow through the coffee roaster to a minimum level, the minimum level being determined such that the heating elements are not damaged.

In an embodiment including an exhaust air treatment unit, the exhaust air treatment unit includes a catalyzer, the catalyzer being configured to remove odorous substances from exhaust air that is withdrawn from the drum. A catalyzer and favorably auxiliary components as discussed further below may be provided in addition to, in particular in series with water-based exhaust air treatment as mentioned before. Typically, however, an exhaust air treatment unit including a catalyzer may be foreseen as alternative. It has the particular advantage that odorous respectively smelly substances can be removed from the exhaust air without the generally complex and cumbersome cooling water handling. In particular, the catalyzer may be configured to remove carbon monoxide from the exhaust air.

In a particular embodiment including an exhaust air treatment unit with a catalyzer, the exhaust air treatment unit includes an exhaust air heater, the exhaust air heater being arranged fluidically upstream with respect to the catalyzer, and an exhaust air cooler, the exhaust air cooler being arranged fluidically downstream with respect to the catalyzer. The exhaust air heater, the catalyzer and the exhaust air cooler are generally fluidically arranged in series. The exhaust air heater is activated and used during the roasting, process, in particular a final phase of the roasting process, to heat the exhaust air that has left the drum to an optimal temperature for catalytic cleaning respectively odorous substance removal via the catalyzer. The exhaust air heater may heat the exhaust air to a temperature of between 200° to 400°, preferably between 250° to 300°. In an earlier phase of the roasting process, the exhaust air heater may be typically deactivated respectively switched off.

The exhaust air heater may be controlled by control unit via an exhaust air heater control signal. The exhaust air heater control signal may be part of the control output signal. Controlling operation of the exhaust air heater may in particular include controlling the heating power of the exhaust air heater e.g. by switching on/off and/or regulating the heating power continuously or in a number of discrete steps. Additionally, an exhaust air temperature sensor may be arranged at or downstream from the exhaust air heater to measure a temperature of the heated exhaust air. The exhaust air cooler is provided to cool the significantly heated exhaust air that exits the catalyzer. The exhaust air cooler may, for example, comprise a gas cooler in which the exhaust air is passed through tubing which heats up and then dissipates heat to the environment via convection and radiation. Additionally, one or more fans may be arranged in the coffee roasting and configured to blow and/or suck air over the exhaust air cooler, in particular tubing of a gas cooler, to increase a rate of heat dissipation and therefore reduce the temperature of the exhaust air leaving the coffee roaster.

In addition, or alternatively to the before-mentioned arrangements, an exhaust air treatment unit may include further odorous and/or hazardous substance removal devices. In particular, a mechanical particle filter may be foreseen which is passed through by the exhaust air. In addition, or alternatively to a mechanical filter, a particle filter may include an electrostatic particle filter. The electrostatic particle filter may be configured to retain particles by way of electrostatic attraction respectively repulsion. Further, the particle filter may be or include an active carbon filter. In an example, the electrostatic particle filter comprises a fiberglass filter. In an embodiment, the exhaust air treatment unit is configured such that the removal devices, in particular the mechanical particle filter, is accessible and removable and therefore easily replaceable.

A chaff separator and an exhaust air treatment unit are generally fluidically arranged between the drum outlet and the exhaust air withdrawer. Favorably, a chaff separator is arranged fluidically upstream of the exhaust air treatment unit such that the exhaust air is free or largely free from chaff when entering the exhaust air treatment unit.

In an embodiment, the coffee roaster includes a raw bean scale for measuring the weight of the raw coffee beans before being filled into the drum. Further in an embodiment, the coffee roaster may include a roasted bean scale for measuring the weight of the roasted coffee beans after being roasted. In an embodiment, the coffee roaster includes a bean scale that serves both as raw bean scale and as roasted bean scale. The bean scale may be integrated into a drawer or container. The drawer or container may be used for filling raw coffee beans into the drum respectively hopper as explained before. The drawer or container and the box and the bean scale may be configured for measuring the weight of the raw coffee beans prior to filling the raw beans into the drum respectively hopper. After the roasting, the drawer or container may be placed at or under the cooling container outlet such that the roasted and optionally dried coffee beans fall respectively are released into the drawer or container and the roasted bean weight of the roasted, cooled and optionally dried coffee beans is measured.

Favorably, the raw bean scale and the roasted bean scale respectively the bean scale as combined raw bean scale and roasted bean scale are/is operatively coupled with the control unit for transmitting a measured raw bean weight respectively a roasted bean weight to the control unit. The control unit may in some embodiments be configured to store and/or process the raw bean weight and the roasted bean weight. Optionally, the control unit may be configured to transmit the raw bean weight and/or the roasted bean weight to a remote computer system as explained further below. The control unit and/or the remote computer system if applicable may further be configured to determine, based on a difference and/or ratio of the raw bean weight and the roasted bean weight, whether the roasting and drying of the coffee beans was successful. In the affirmative case, the roasted bean weight is more than 10% below the raw bean weight.

For controlling operation of the coffee roaster and providing information, such as status information, warnings, and/or alerts to a user, the control unit may include and/or be designed to operatively couple to a user interface unit. The user interface unit may be part of the coffee roaster or may, fully or partly, be provided as a separate user interface device. In particular embodiments, the user interface device is a general purpose computing device, such as a smartphone, a tablet computer, or a laptop or desktop computer. In an embodiment, the control unit may be fully or partly realized by such general purpose computing device.

In an embodiment, the user interface device and the control unit may be configured to communicate via a wireless communication interface, for example, a Bluetooth and/or Wifi interface and/or an interface for communication via a mobile communication network, e .g. according to the 5G standard. Alternatively, or additionally, the user interface device and the control unit may be configured to communicate via a wired interface, for example one or more USB bus (for example mini-USB, micro-USB, USB, USB-C) or a wired LAN interface. Further in some embodiments, the control unit and the user interface device may be configured to communicate via the internet. For this purpose, the user interface device and the control unit may be configured for wired and/or wireless internet access. The user interface device may further be configured to communicate with a remote computer system via the Internet.

Controlling execution of the roasting process according to the selected roasted profile is generally a closed-loop control where the control output signal is generated respectively modified substantially in real time based on the control input signal as feedback signal and the selected roasting profile. In typical embodiments, the closed loop control is a multi-input-multi-output control with the signals provided by the sensors of the sensor arrangement forming, in combination, the control input signal.

Roasting profiles and in particular the selected roasting profile may include the desired roasting bean temperature as function of time e.g. in form of one or more interpolation functions, such as splines, respectively their parameters, and/or as look-up table of time-temperature pairs. Further, a roasting profile may only include temperatures that should be approached one after the other.

Generating the output control signal respectively its components by the control unit may be based on classical controller designs, for example PID controllers, and/or be based e.g. on fuzzy control algorithms and/or a neuronal network.

The control parameters are not necessarily in each case constant over time during the roasting process but may be varied or modified for example in a pre-determined manner as a function of time and/or may be changed in accordance with one or more rules that form part of a roasting profile, in particular the selected roasting profile, in dependence of the occurrence of characteristic events as explained in the following.

The control input signal may include one or more sensor signals that are directly and/or indirectly indicative for the temperature conditions inside the drum, in particular the roasting bean temperature signal, the rear wall temperature signal, the inlet air temperature signal, and the air flow signal. Further, the control input signal may include one or more sensor signals that are indicative for a phase of the roasting process and/or for particular characteristic events during the roasting process, in particular a roasting bean color signal and/or a crack detection signal as mentioned before. Such characteristic events may also be derived from temperature-indicative sensor signals as mentioned before, such as the roasting bean temperature signal. By way of example, the bean temperature as determined by the roasting bean temperature sensor may assuming a pre-determined characteristic value in accordance with the selected roasting profile may serve as characteristic event. Upon occurrence of a characteristic event, the control unit may be configured to modify or alter the generation of the control output signal, respectively one or more of its components. By way of example, a set value for the roasting bean temperature, the rear wall temperature, the drum air temperature, the heating power of the air heater, and/or a set value for the positive pressure device and/or negative pressure device, such as the rotational speed of a supply fan and/or withdrawer fan, may be modified upon occurrence of a characteristic event.

Not all sensor signals, however, are directly used for controlling the roasting process. Particular sensor signals may be used for supervising and monitoring the roasting process without impact on the control out signal. By way of example, the air humidity signal as generated by an optional air humidity sensor may be evaluated by the control unit in order to generally supervise the progress of the coffee bean roasting process and in particular the roasting process as such. Additionally, the air humidity is an indicator for the taste that can be expected from the roasted coffee beans. Further, an exhaust airtemperature sensor may optionally be arranged to measure the exhaust air temperature, for example at or in the chimney. An exhaust air temperature signal may be evaluated by the control unit generally for safety purposes.

The control output signal may include one or more control signals via which the temperature conditions inside the drum, in particular the rear wall temperature, the drum air temperature, and/or the bean temperature may be influenced by controlling operation of one or more of the air heater, the drum heater, the positive pressure device and the negative pressure device. Generally, an increase in the heating power of the drum heater and/or the air heater result in a temperature increase inside the drum, and the other way around. Likewise, an increased operation of the positive pressure device, in particular an increased rotational speed of a supply fan, will result in a temperature increase inside the drum, and the other way around. An increased operation of the negative pressure device, in particular an increased operation of a withdrawer fan, results in a temperature decrease inside the drum, and the other way around. As mentioned before, the air flow of hot air that is fed into respectively enters the drum should generally correspond to the air flow of exhaust air that is withdrawn from respectively exits the drum during roasting.

In a typical embodiment, the rear wall temperature may be controlled in a range from the ambient temperature up to about 300° Celsius, the temperature of the hot air may be controlled in a range from the ambient temperature up to about 550° Celsius, and the rotational speed of the drum rotor may be controlled, if activated in a range from e.g. 50 RPM (Rounds per Minute) to 90 RPM and the withdrawer fan and supply fan may be controlled for an air flow rate e.g. in a range of 10 liters per minute up to 350 liters per minute.

Controlling execution of the cooling process via a cooling unit as explained before may be a closed loop control where at least one of the corresponding control signals, in particular a cooling rotor drive control signal, a cooling air supply control signal and/or a cooling water supply control signal are generated respectively modified substantially in real time based on the control input signal, in particular the signals provided by the one or more cooling sensors, as feedback signal, and the selected roasting profile. In alternative embodiments, the control signals as mentioned before are at least partly generated according to an open-loop control during cooling. In particular, while the supply of cooling water is favorably stopped at a wetting temperature threshold as explained before, the cooling air supply, in particular a supply fan may be time-controlled or continue to operate until it is switched off manually and/or a next batch of coffee beans shall be roasted.

In some embodiments, the control unit may be configured to further to modify or alter the generation of the control output signal in dependence of the control input signal upon occurrence of one or more limit events. Such a limit event may, for example, be the roasting bean temperature, the hot air temperature inside the drum or the exhaust air temperature assuming or exceeding a respective limit temperature. In such case, the control unit may, for example, be configured to reduce the heating power of the drum heater, the amount of hot air that that is provided via the positive pressure device, and/or the heating power of the hot air supply. Limit values, in particular limit temperatures, may be fixed and/or may be part of a roasting profile.

The control algorithm and/or the control parameters generating the control output signal in dependence of the control input signal may be permanently stored by the control unit. Alternatively, or additionally, the control unit may be configured to receive the control algorithm and/or the control parameters from a remote computer system for an individual or a number of roasting processes, to store the control algorithm and/or control parameters and generate the control output signal in accordance with the stored control algorithm and/or control parameters. In such embodiment, the control algorithm and/or control parameters may be modified via the remote computer system as desired.

A coffee roaster and in particular a coffee roaster in accordance with the present disclosure may according to a favorable embodiment have a modular design and includes a coffee roaster frame or base that may, for example include the control unit and potentially supplementary devices, such as a power supply. The roasting unit, cooling unit, and exhaust air treatment unit may be designed as generally-self-contained units, for example plug-in units that are designed to be mounted on or plugged into the frame or base, with the base or frame as well as the single modules favorably comprising corresponding electrical as well as fluidic couplers, with the coupling of the modules being via the base or frame. Some or all couplings, in particular fluidic couplings, however, may also be directly between the modules Optionally, some or all of the modules may be split into sub-modules that are designed to be mounted on or plugged into the frame or base separately. In particular, the drum with the drum heater and the hot air supply may be provided as separate sub-modules. Similarly, an inlet module that may include a hopper and a drum inlet shutter as mentioned before, a chaff separator module may be provided and mounted on or plugged into the frame or base. In some embodiments, the control unit and/or supplementary further devices as mentioned before are not included in the coffee roaster frame or base but are also designed as self-contained modules. Further, a combination of a bean scale, a bean tray and a drawer as explained further below in the context of exemplary embodiments, may be provided as separate and structurally distinct unit.

Such modular design significantly simplifies the maintenance and cleaning of the coffee roaster, in particular by a user respectively a non-technician. Further, it simplifies repair and exchange of defective modules.

In an embodiment, the control unit is configured for operatively coupling with a remote computer system and to receive the selected roasting profile from the remote computer system. The remote computer system may be centralized and/or a cloud-based remote computing system. Favorably, the remote computing system and the coffee roaster respectively its control unit are configured for communicating via the Internet as explained before. Further in such embodiment, a user interface device as mentioned before and the remote computer device may be configured for communicating via the internet. In such embodiment, the user interface device generally communicates with the coffee roaster via the remote computer system as intermediate element. Alternatively, or additionally, however, a user interface device and the coffee roaster may be configured for direct wired and/or wireless communication. This is in particular favorable for providing, e.g. a start command for the roasting process to the coffee roaster as well as displaying information such as alerts and warnings as well as information regarding the roasting process, e.g. sensor signals, to a user.

A coffee roasting system in accordance with the present disclosure includes a coffee roaster wherein the control unit is configured for operatively coupling with a remote computer as explained before. The coffee roasting system may also include a number of such coffee roasting machines. The coffee roasting system further includes a remote computer system, wherein the remote computer system is configured to store a plurality of available roasting profiles and to receive a user input for selecting the selected roasting profile from the plurality of available roasting profiles and to transmit the selected roasting profile to the control unit. In such embodiment, the user generally selects a roasting profile on a user interface device as explained before, with the selection being communicated to the remote computer device.

In some embodiment where the control unit is configured for operatively coupling with a remote computer system, the control unit is configured to acquire sensor data during coffee bean roasting process and to transmit the acquired sensor data and/or data derived from the acquired sensor data to the remote computer system.

The acquired data may in particular include one or more of a roasting bean temperature signal, a roasting bean temperature signal, a cooling bean temperature signal, a cooling bean color signal, a rear wall temperature signal, a drum air temperature signal, in inlet air temperature signal, air humidity signal, an air flow signal, a crack detection signal, and/or a water temperature sensor signal as explained before. Further, the acquired sensor data may include a raw bean weight, a roasted bean weight, and/or a ratio respectively difference between them.

Further, the control unit may be configured to transmit the control output signal and/or data derived from the control output signal to the remote computer system.

Data derived from the acquired sensor data may, for example be average values, extreme values, smoothed values, or filtered values as well as characteristic durations or points in time, for example the time from the beginning of the coffee bean roasting process to the first crack as detected by the crack detection sensor, the roasting bean temperature at the end of the roasting process (prior to cooling), the cooling bean temperature at the end of the cooling process, the roasting bean color at the end of the roasting process (prior to cooling), the cooling bean color at the end of the cooling process, and the like.

The remote computer system may be configured to store and/or further evaluate and/or process the received data from one or more coffee roasters, in particular for quality control purposes.

Further in an embodiment, the remote computer system is configured to evaluate the acquired sensor data and/or data derived from the acquired sensor to determine whether a coffee bean roasting process has been successful and to transmit corresponding feedback information to the coffee roaster, in particular its control unit, and/or a user interface device.

Further, the control unit and the user interface or user interface device may be configured for displaying particular characteristic events or milestones, in particular characteristic events of the coffee bean roasting process, on a display of the user interface or user interface device. Such characteristic events may include one or more of the pre-roasting conditions being met respectively the pre-heating being completed, the start of the roasting process, the occurrence of the first crack, the end of the roasting, the beginning of cooling and the end of the cooling, respectively the end-of-cooling condition being met. Further, the control unit and the user interface or user interface device may be configured for displaying sensor data in real time on a display of the user interface or user interface device.
Fig. 1 shows an exemplary embodiment of a coffee roaster in accordance with the present invention in a schematic side view;
Fig. 2 shows the arrangement of sensors in a coffee roaster as illustrated in Fig. 1;
Fig. 3 shows the control arrangement of coffee roaster as illustrated in Fig. 1;
Fig. 4 shows an embodiment of a coffee roasting system in accordance with the present disclosure;
Fig. 5 illustrates a coffee bean roasting process;
Fig. 6 shows a further exemplary embodiment of a coffee roaster in accordance with the present disclosure in a schematic side view;
Fig. 7 illustrates a further exemplary coffee bean roasting process.

### DESCRIPTION OF THE EMBODIMENTS

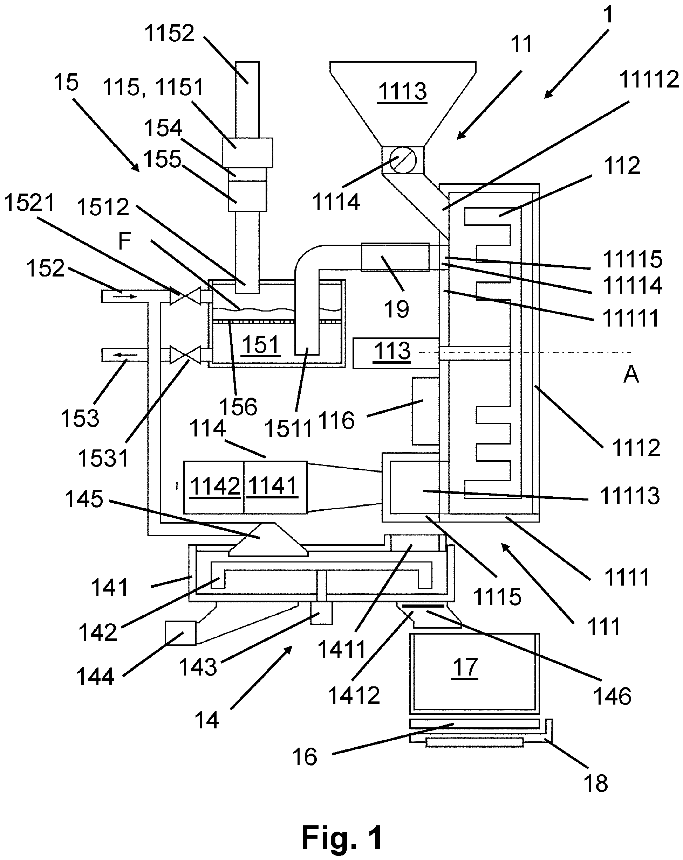

In the following, reference is first made to **Figure 1**, showing an exemplary embodiment of a coffee roaster 1 in accordance with the invention in a schematic side view. The coffee roaster 1 includes a roasting unit 11, a cooling unit 14 and an exhaust air treatment unit 15. Further, the coffee roaster 1 includes a structurally separate respectively removable bean tray 17 with a drawer 18 and an integrated bean scale 16.

The roasting unit 11 includes drum 111 with drum body 1111 and front wall 1112 that result, in combination, in a generally cylindrical respectively disk-shaped overall shape of the drum 111. Favorably, the drum 111 has a filling volume respectively inner drum space that is suited for roasting about 1 kg of coffee beans. The drum has a horizontal drum axis A that coincides with the rotor axis of a rotor drum 112 that is rotatable arranged inside the drum 111. The drum is designed as explained in the general description, with the front wall 1112 being transparent and removable. The rear wall 11111 of the drum body 1111 is designed as sandwich in the interest of its thermal properties as explained above and is thermally coupled with an exemplarily resistive drum heater 116 that is arranged outside the drum 111. The drum heater 116 is arranged to ensure a substantially uniform heating of the rear wall 11111. In an upper area of the rear wall 11111 a drum inlet 11112 is arranged. Similarly, a drum outlet 11113 is arranged in a lower area of the rear wall 11111. A drum rotor 112 is connected to a drum rotor drive 113 which is realized as electric motor and is arranged outside the drum.

A hot air supply 114 is provided to supply hot air into the drum 111. arranged generally outside the drum and fluidically connected with the drum outlet 1111 3 via tubing (not referenced) to supply hot air into the drum. In the shown embodiment, the hot air supply 114 includes a resistive air heater 1141 and a positive pressure supply 1142 in form of a supply fan. In the shown embodiment, the hot air supply 114 is fluidically coupled via tubing with the drum outlet 1113, with the drum outlet 1113 simultaneously serving as hot air inlet. This, however, is not essential and a separate hot air supply opening may alternately be foreseen in the drum body 1111 , in particular the rear wall 11111 .

Via corresponding tubing, the drum inlet 1112 is connected with a hopper 1113 into which the raw beans to be roasted are filled. In the connection of the drum 111 respectively its inner space and the hopper 1111, a drum inlet shutter is arranged. Only if the drum inlet shutter 1114 is open, the raw beans that are present in the hopper 1113 may be transferred into the inner space of the drum 111 by way of gravity. The drum inlet shutter is generally open only for filling raw coffee beans into the drum 111, but is closed otherwise. For filling the drum with raw coffee beans, such beans are in this embodiment first filled into the bean tray 17 by a user, where the raw bean weight is automatically measured by bean scale 16. Subsequently, the user moves respectively lifts the bean tray 17 with the drawer 18 and the bean scale 16 to the hopper 1113 and fills the beans from the bean tray 17 into the hopper 1113

In this embodiment, the bean tray 17, the drawer 18 and the bean scale 16 form an integral unit that is structurally separate from the further components and units of the coffee roaster 1 and is movable by a user.

Further, an exhaust air withdrawer 115 is provided to remove exhaust air from the inside of the drum. The exhaust air withdrawer 115 includes a negative pressure device 1151 that is fluidically coupled with an exhaust air withdraw opening 11114 in the upper area of the rear wall 1 1 1 1 1 via corresponding tubing and, in this embodiment, an exhaust air treatment unit 15 as explained further below. The negative pressure device 115 includes in this design a withdrawer fan 1151 to generate a suction pressure. Further, the exhaust air withdrawer 1152 includes a chimney 1152 in fluidic coupling with the withdrawer fan 1151. In the exhaust air withdrawal opening 11114, a bean retainer 1111 5 in form of a perforated plate or a mesh is arranged to prevent coffee beans from leaving the inner space of the drum 111, while allowing air and chaff to pass.

The exhaust air treatment unit 15 is fluidically arranged between the exhaust air outlet 1114 of the drum 111 and the negative pressure device respectively withdrawer fan 1151 with chimney 1152. Thanks to the exhaust air treatment unit, the exhaust air that ultimately exits the chimney 1152 is cool and substantially free of undesired odorous substances, thereby allowing the coffee roaster 1 to be used within a generally closed room.

In the shown design, chaff separator unit 19 is fluidically arranged between the drum 111 and the exhaust air treatment unit 15. The chaff separator unit 19 may in particular include a cyclone separator and/or a mechanical chaff retainer filter according to the general description above.

The main element of the exhaust air treatment unit 15 is a water tank 151. In operation, the water tank 151 is filled to a filling level F with water, with the filling level F being below the exhaust air withdraw opening 11114 of the drum 11. In the shown embodiment, water tank 151 is fluidically coupled with a fresh water supply 152 via a fresh water supply valve 1521 for supplying fresh water into to the water tank 151 if the fresh water supply valve 1521 is open. Further, the water tank 151 is in this embodiment fluidic coupled with an exhaust water drain 151 via an exhaust water drain valve 1531 to remove exhaust water from the water tank 151 if the exhaust water drain valve 1531 is open.

Generally, the filling volume of the water tank 151 may be in a typical range of 0.5 to 2 liters, for example one liter and is favorably dimensioned sufficient to allow exhaust air treatment for a number of e. g,.one to three roasting operations. It is noted that an explicit fresh water supply 152 and exhaust water drain 153 as well the corresponding fresh water supply valve 1521 and drain exhaust water drain valve 1531 may in principle be omitted. In such embodiment, the water tank 151 may be filled and emptied manually by a user.

Below the filling level F, a water tank air inlet 1511 is arranged that is fluidically cooled via tubing with the exhaust air withdraw opening 1114 and accordingly the inner drum space.

Above the filling level F, a water tank air outlet 1512 couples the inner space of the water tank 151 via tubing with the negative pressure device respectively withdrawer fan 1151 via a condenser 155 and an exhaust air filter 154, such that air that leaves the water tank 151 first passes the condenser 155 and subsequently the exhaust air filter 154, typically an active carbon filter, before leaving the chimney 11 52. Apart from the water tank air inlet 1511 and the water tank air outlet 1512, the water tank 151 is generally closed in operation.

Inside the water tank 115 and generally below the filling level F, a bubble enhancer r 156 in form of a perforated plate is arranged that substantially extends over the whole lateral surface area of the water tank 151. In embodiments without dedicated chaff separator unit, the bubble enhancer 156 may at the same time serve as chaff separator as explained above in the general description.

During the roasting process, the negative pressure device respectively withdrawer fan 1151 is generally active, thereby generating a negative pressure respectively under pressure in the air volume inside the water tank 115 above the filling level F, resulting in the water inside the water tank 151 being agitated and air bubbles being created. Exhaust air that enters the water tank 151 together with chaff comes into contact with the water and is accordingly cooled down, freed from chaff and at least partly from odorous substances and further contained associated material, in particular smoke. The exhaust air rises to the water surface at the filling level F and is withdrawn by the negative pressure device respectively withdrawer fan 1151 after passing the condenser 1 55 and the exhaust air filter 1 54 as explained before.

For cooling the roasted coffee beans at the end of the roasting process, a cooling unit 14 is present in this embodiment. The cooling unit 14 includes a cooling container 141 with a cooling container inlet 1411 and a cooling container opening 1412. The cooling container inlet 1411 is favorably arranged under the bean outlet opening 1113 of the drum 111, thereby allowing roasted coffee beans to be transferred from the inner space of the drum into the cooling container 141 by way of gravity. Between respectively at the connection of the drum outlet 1113 and the cooling container inlet 1411, a drum outlet shutter 1115 is present that allows the transfer of coffee beans into the cooling container 141 only in its open state. During the roasting of the coffee beans inside the drum 111, the drum outlet shutter 111 5 is closed and is only opened at the end of the roasting.

The cooling unit 14 optionally includes a rotatory arranged cooling rotor 142 that is arranged inside the cooling container 141 and is operatively coupled with a cooling rotor drive 143 in form of an electric motor. In the shown embodiment, cooling of the coffee beans is obtained by way of cool air as well as an optional fog of water droplets, thereby allowing efficient cooling within short time, without wetting or otherwise negatively affecting the coffee beans.

For providing cool air, a cooling air supply 144 in form of a cooling fan 144 is provided that aspires respectively sucks cool air from the environment which is fed into the cooling container 141 and moves between and along the coffee beans. Favorably, the cool air enters the cooling container 141 at its bottom side.

For providing cooling water, an optional cooling water supply 145 is provided that includes a nozzle arrangement and a nozzle control valve. Via the nozzle arrangement, small water droplets respectively fog is created inside the cooling container 141. Via the cooling rotor rotating during the cooling, the coffee beans are continuously moved and exposed to cool air as well as the optional water droplets. At the end of the cooling process, a cooling container outlet shutter 146 is opened, thereby allowing the transfer of the cooled coffee beans into the bean tray 17 placed under the cooling container outlet 1412 by way of gravity. During the cooling, the cooling container outlet shutter is closed and is opened only at the end of the cooling. During the transfer of the coffee beans out of the cooling container 114 into the bean tray 17, the cooling rotor 141 favorably rotates to ensure that the coffee beans are actually transferred to the cooling container outlet 1412 and exit the cooling container 141.

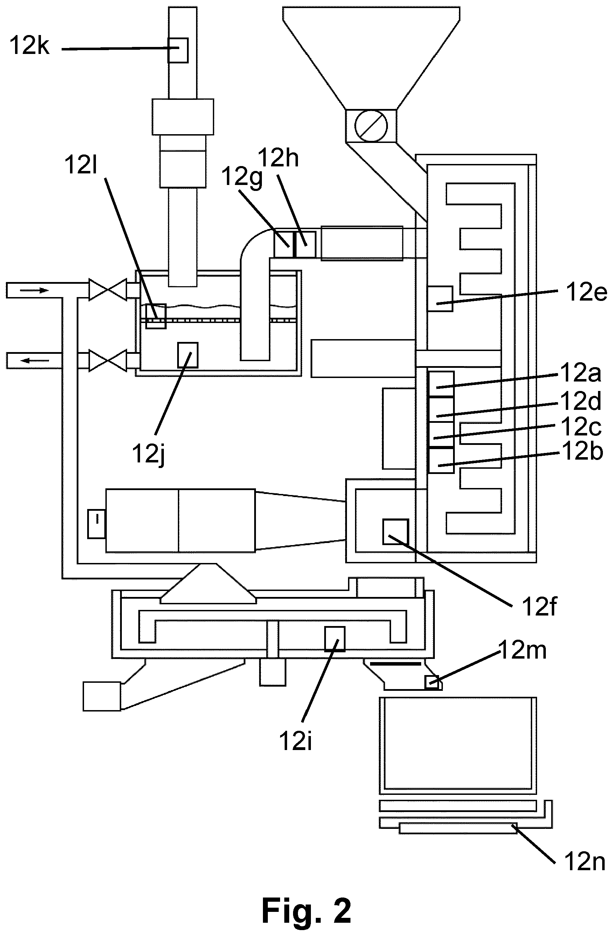

In the following, reference is additionally made to **Figure 2**, illustrating an exemplary embodiment for the arrangement of various sensors of the sensor arrangement of the coffee roaster 1. The sensors are used for controlling and supervising the coffee bean roasting process, in particular the roasting and the cooling of the coffee beans, as well as the operation of the exhaust air treatment unit 15.

Respectively inside the drum 11, a roasting bean temperature sensor 12a, a roasting bean color sensor 12b, a rear wall temperature sensor 12c, a drum air temperature sensor 1 2d as well as a crack detection sensor 12e, which may exemplarily be realized as microphone, are arranged. All of these sensors are, similar to the drum heater 116, arranged at the drum body 1111 and favorably at and/or in the rear wall 11111 , in order to allow simple removal of the front wall 1112. At the drum outlet 11113, which also serves as hot air supply opening into the drum 111 in this embodiment as explained before, an inlet air temperature sensor 12f is arranged. Within the water tank 115 and below the filling level F, 15, a water temperature sensor 12j is arranged.

Further, an optional exhaust air temperature sensor 12k is arranged in this embodiment downstream of the negative pressure device respectively withdrawer fan 1151 that measure the air temperature of the exhaust air before leaving the chimney 1152. Between the drum outlet 111 3 and the water tank air inlet 1511, an optional air outlet pressure sensor 12h, air inlet pressure sensor 12h2, and an optional air humidity sensor 12g are arranged that measures the exhaust air pressure and exhaust air humidity, respectively.

For monitoring the cooling of the coffee beans and detecting if the end-of-cooling condition is met, a cooling bean temperature sensor 12i is in this embodiment arranged inside the cooling container 141. As mentioned above, a cooling bean color sensor could be present additionally or alternatively.

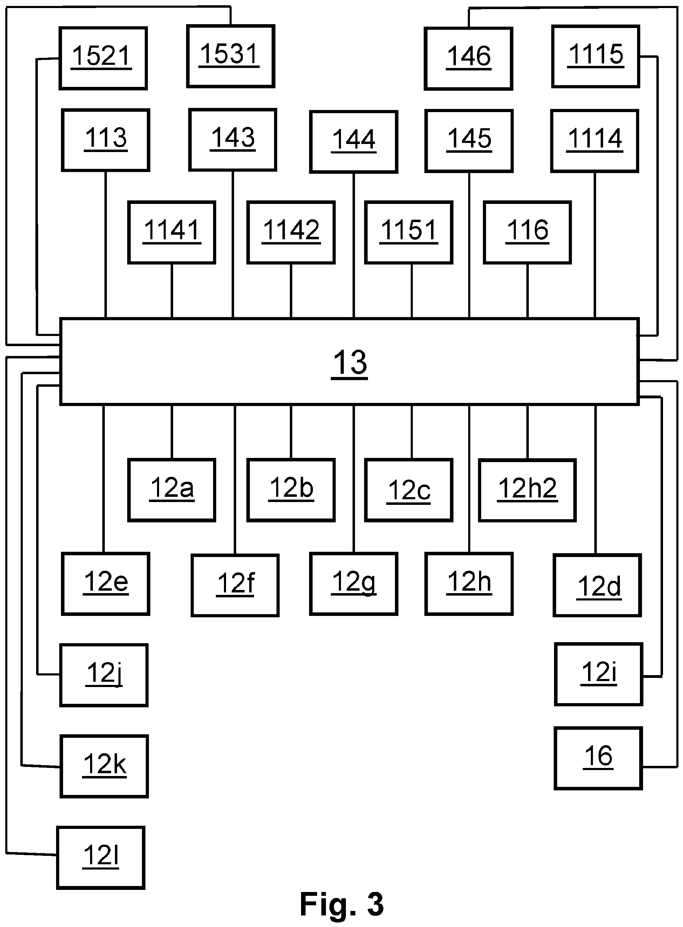

In the following, reference is additionally made to **Figure 3**, showing the control arrangement of the coffee roaster 1 in a schematic functional view. The coffee roaster 1 includes a control unit 13 that is typically based on one or more microcomputers and/or microcontrollers running corresponding software code, but may also include further electronics and circuitries. The control unit 13 may further include sensor interface and/or evaluation circuitry for some or all of the various sensors as explained above and further below. However, such sensor interface and/or evaluation circuitry may also be part of and formed integral with some or all sensors. Similarly, the control unit 13 may include drive and/or control circuitry for the various motors and further actuators as well as the rear wall heater and the air heater and further actuators of valves and shutters. However, such drive and/or circuitry may also be part of and formed integral with some or all of these units or components. Generally, the control unit 13 is configured to evaluate the sensor signals and to control and monitor operation of the coffee roaster 1 as a whole, in particular the roasting unit 11, the cooling unit 14, and the exhaust air treatment unit 1 5.

The control unit 13 includes memory (not separately referenced) that stores the required program code that, when executed, instructs the more microcomputers and/or microcontrollers of the control unit 13 to control operation of the coffee roaster 1. Further, the control unit 13 includes memory for storing the selected roasting profile and optionally a plurality of available roasting profiles. Further, the control unit 13 further favorably includes memory for at least temporarily storing senor data that are acquired by the sensors and optionally the bean scale 16 during respectively in the context of one or more coffee bean roasting processes, as explained above in the general description.

In the shown embodiment, the control unit 13 receives input signals respectively sensor signals from roasting bean temperature sensor 12a, roasting bean color sensor 12b, rear wall temperature sensor 1 2c, drum air temperature sensor12d, crack detection sensor respectively microphone 12e, inlet air temperature sensor12f, air humidity sensor 12g, air outlet pressure sensor 12h, air inlet pressure sensor 12h2, cooling bean temperature sensor 12i, water temperature sensor 12j, exhaust air temperature sensor 12k, and filling level sensor respectively float gauge 12l as well as the bean scale 16. The sensors are operatively coupled to the control unit 13 in hardwired and/or wireless manner. While most sensors are typically hard-wired, especially the bean scale 16 may be coupled to the control unit 16 favorably wirelessly, e.g. via Bluetooth or WLAN. The sensor signals, in particular those sensor signals that are associated with the roasting and cooling of the coffee beans, form, in combination, the control input signal as explained before.

In the shown embodiment, the control unit 13 generates control signals for air heater 1141 positive pressure device respectively supply fan 1142, negative pressure device respectively withdrawer fan 1151, drum heater 116, drum rotor drive 113, cooling rotor drive 143, cooling air supply respectively cooling fan 1144 and cooling water supply 145 respectively its nozzle valve. Further, the control unit generates control signals for drum inlet shutter 1114, drum outlet shutter 1115, cooling container outlet shutter 146, as well as fresh water supply valve 1 521 and waste water drain valve 1 531. The different control signals may be analogue signals and/or binary signals. The control signals, in particular those control signals that are associated with the roasting and cooling of the coffee beans, form, in combination, the control output signal as explained before.

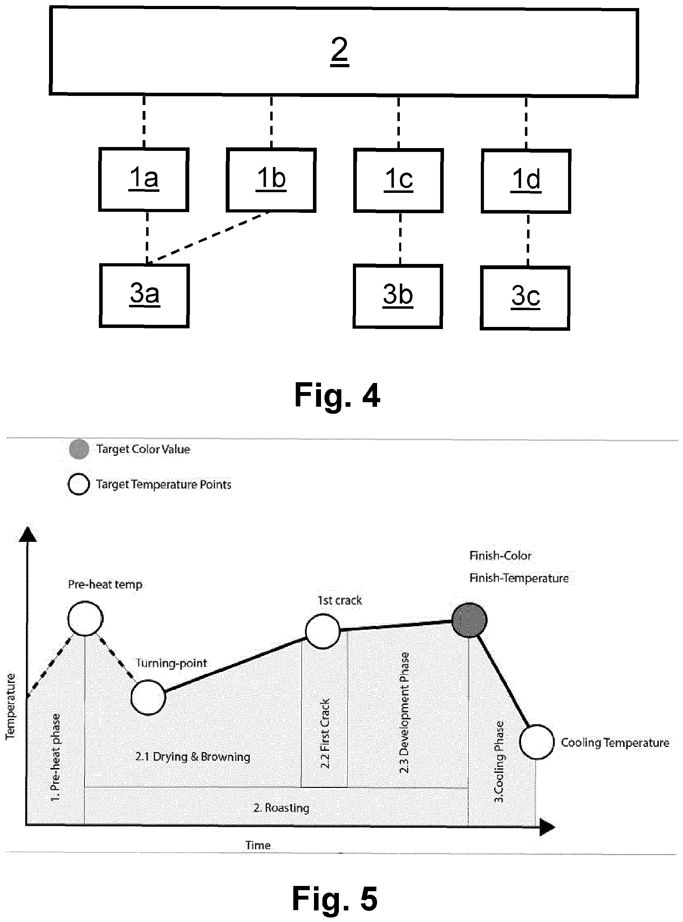

In the following, reference is made to **Figure 4****,** showing a coffee roasting system in accordance with the present disclosure. The coffee roasting system includes a number of coffee roasters 1a, 1b, 1c, 1d in accordance with the present disclosure as well as a remote computer system 2. Exemplarily, four coffee roasters are shown for illustrative purposes, while other numbers, including only one coffee roaster, may also be present. The coffee roasters 1a, 1b, 1c, 1d may for example coffee roasters 1 or 1' as discussed above and further below.

The coffee roasters 1a, 1b, 1c, 1d are operatively coupled with the remote computer system 2 which is exemplarily sown as centralized computer system, but may also be a distributed, in particular cloud-based computer system.

The coffee roasters 1a, 1b, 1c, 1d and the remote computer system 2 are operatively coupled, exemplarily via an Internet-based connection.

Further, a number of user interface devices 3a, 3b are present that are exemplarily separate and distinct from the coffee roasters 1a, 1b, 1c, 1d and, e.g. be realized as tablet computers. In the shown configuration, user interface device 1a is operatively coupled with two of the coffee roasters 1a, 1b, while the other two coffee roasters 1c, 1d are each operatively coupled with a user interface device 3b respectively 3c, in a one-to-one relation. In this configuration, the coffee roasters 1a, 1b may be located close to each other, e.g. in one shop, while the coffee roasters 1c, 1d are located at different locations, in further shops.

In the shown configurations, the user interface devices communicate with the coffee roasters directly, e.g. via Bluetooth and may communicate with the remote computer device 2 via the coffee roasters. In alternatively configurations, however, the user interface devices 3a, 3b, 3c connect to the internet and communicate with the coffee roasters 1a, 1b, 1c, 1d and/or the remote computer device 2 via the Internet. In a further configuration, the user interface devices 3a, 3b, 3c as well as the coffee roasters 1a, 1b, ac, 1d only communicate with the remote computer device 2 as central instance, the user interface devices and coffee roasters communicate via the remote computer device.

In particular, if the user interface devices 3a, 3b, 3c are general-purpose-devices, they may store corresponding program code, in particular a suited software application respectively app. Alternatively or additionally, however, the control unit 13 of each coffee roaster 1 as well and/or the remote computer system 2 include an implemented Web server that is configured to generate and provide Web pages that are transmitted to and processed by the user interface devices.

In the following, reference is additionally made to **Figure 5****,** showing an example for roasting coffee beans and an example a selected roasting profile and/or target roasting profile.

In the diagram of **Figure 5****,** the vertical axis (ordinate) shows the temperature inside the drum (as measured by drum air temperature sensor 12a, the rear wall temperature sensor 12c and/or the roasting bean temperature sensor 12d as a function of time.

At the beginning of a coffee bean roasting process, the control unit 13 generates a pre-roasting control output signal, thereby heating the drum and in particular the inner drum space until a selected pre-roasting condition is met. During the pre-heating, the hot air supply 114 in particular positive-pressure device respectively supply fan 1142 and air heater 1141,the drum heater 116 and the exhaust air withdrawer 11 5, in particular negative pressure device respectively withdrawer fan 1151 are operated. Further, the drum rotor drive 113 may optionally be activated to ensure that the hot air is equally distributed inside the inner drum space. During pre-heating, the shutters and in particular the drum inlet shutter 1114 and the drum outlet shutter 1111 5 are controlled by the control unit 13 to be closed. During the pre-heating, a user may fill the bean tray 17 with coffee beans that are weighted by bean scale 16 and the weight being transmitted as raw bean weight to the control unit 13. Subsequently, the user fills the raw coffee beans from the bean tray 17 into the hopper 1113 where they remain as long as the drum inlet shutter 1114 stays closed.

The pre-roasting condition is characterized by a pre-heat temperature. As the control unit 13 determines that the pre-roasting condition is met, the drum inlet shutter 1114 is controlled to temporarily open, thereby allowing the raw beans to be transferred respectively fall into the drum 111 and the drum inlet shutter is controlled to close again. During transferring of the raw coffee beans into the drum 111, the drum rotor drive 113 is favorably controlled to rotate the drum rotor 112 at an appropriate speed to ensure that the raw coffee beans are transported away from the drum inlet 1112.

Upon the coffee beans being filled into the drum 111, the temperature of the inner drum space decreases until a turning point temperature which is part of the selected roasting profile is reached at a turning point. However, while the actual temperature decreases, the control output signal is controlled to maintain the pre-heat temperature. Subsequent to the turning point, the temperature is again increased until the first crack is detected by the crack detection sensor respectively microphone. 112e. In a subsequent development phase, the temperature is controlled to slowly increase until the target roasting bean temperature and target roasting bean color according to the selected roasting profile are reached as indicated by the roasting bean temperature sensor signal and the roasting bean color signal. The target roasting bean temperature and the target roasting bean color being reached indicate the end-of-roasting condition.

During roasting, the temperature is controlled by appropriate control of the air heater 114, in particular hot air supply 1141 and positive pressure device respectively supply fan 1142, drum rotor drive, 113, drum heater 116, and negative pressure device respectively withdrawer fan 1151 via the control output signal as generated by the control unit 13. While in principle all of these units respectively elements may be controlled in a time-varying manner, some may also be controlled in a substantially steady manner and/or in an on/off manner.

As the end-of roasting condition is met, the control unit 13 controls the drum outlet shutter 1115 to open, thereby transferring the coffee beans from the drum 111 into the cooling container 141 of the cooling unit 14. During this transfer, the drum rotor drive 1 13 and the cooling rotor drive 143 are favorably controlled to operate the drum rotor 112 and the cooling rotor 141 at an appropriate speed to ensure that substantially all coffee beans are transferred into the cooling container 141. With the end-of-roasting condition being met, the hot air supply 114 with air heater 1141 and positive pressure device respectively supply fan 1142, as well as the negative pressure device / withdrawer fan 1151 may be deactivated.

During the cooling, the cooling rotor drive 143 is activated to rotate the cooling rotor 142, and the cooling air supply respectively cooling fan 144 and the nozzle valve of the cooling water supply 145 are controlled by the control unit 13 to cool the beans until a target cooling bean temperature as part of the selected roasting profile is reached, thereby indicating an end-of-cooling condition. During cooling, the temperature of the beans is measured by the cooling bean temperature sensor 12i.

As the end-of-cooling condition is met, the control unit 13 controls the cooling container outlet shutter to open, thereby, transferring the cooled coffee beans into the bean tray 17 that is placed under the cooling container outlet 146.

Optionally, a tray sensor 12m, e.g. in form of an optical, capacitive or inductive sensor or a switch is arranged at the cooling unit outlet 1412 and is operatively coupled with the control unit 13. The control unit 13 may be configured to open the cooling container outlet shutter 146 only if the tray 17 is actually present and correctly positioned. Similarly, a drawer sensor 12n may be present to ensure that the drawer 18 is inserted when opening the cooling container outlet shutter 146.

The weight of the roasted coffee beans is weighted by bean scale 16 and the weight is transmitted as roasted bean weight to the control unit 13. Finally, the user may pull the drawer 18 and remove the roasted and cooled coffee beans.

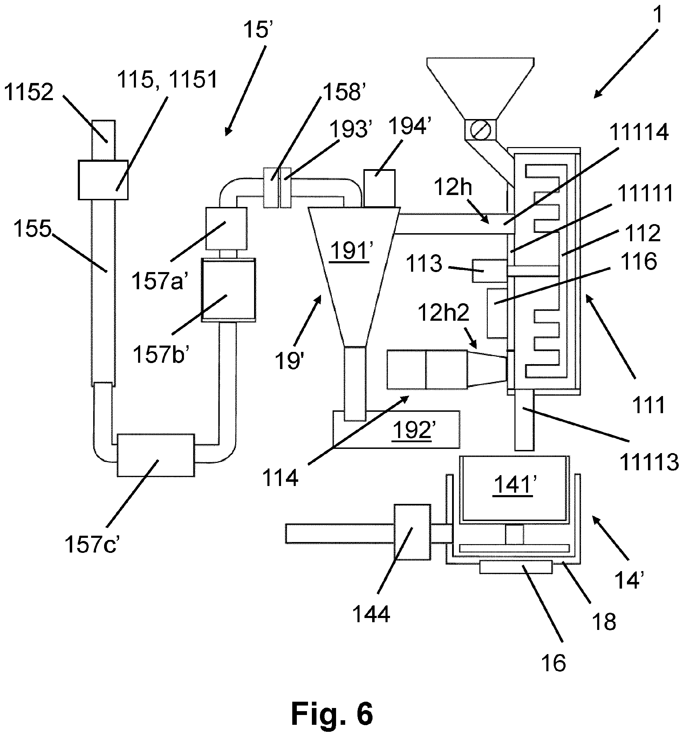

In the following, reference is first made to **Figure 6****,** showing an exemplary embodiment of a coffee roaster 1' in accordance with the present disclosure in a schematic side view, similar to **Figure 1****.** Since the coffee roaster 1' is similar to the coffee roaster 1 regarding its fundamental design and operation and in a number of aspects regarding the device design, the following description is focused on the differences. It is noted that for the sake of clarity the various sensors, actuators and/or other components are not all shown in this embodiment. In principle, sensors, actuators and/or other components as shown in **Figure 2** may be present. Some sensors, actuators and/or other components, however, may also be omitted. The coffee roaster 1' has a different design in particular regarding the cooling and further handling of the roasted coffee beans, as well as the exhaust air treatment.

In the embodiment as illustrated in **Figure 6****,** a user-removable cooling container 141' is foreseen which also serves as a bean tray for removing the roasted coffee beans from the coffee roaster 1'. The cooling container 141' is configured to rest on the bean scale 16. The cooling container 141' has a perforated base allowing air to pass through, the perforations designed such that the beans however cannot pass through.

For cooling the roasted coffee beans, a cooling air supply respectively cooling fan 144 is foreseen similar to embodiments as illustrated in **Figures, 1****,** **2****.** For the coffee roaster 1', however, only air is used for the cooling. During cooling, the cooling air that is supplied by the cooling fan 144 passes and thereby cools the coffee beans and exits the cooling container via the drum outlet 11 113 into the drum. From the drum 111, the cooling air is removed respectively withdrawn by the negative pressure device respectively withdrawer fan 1151. The exhaust air withdrawer serves in this embodiment the double purpose of both withdrawing the exhaust air when roasting as well as the cooling air.

In an embodiment, the cyclone separator, the catalyzer and/or the exhaust air heater work during cooling such that the exhaust air is treated.

The cooling being complete respectively the end-of-cooling condition being met may be determined in the same ways as for the before-discussed embodiments and/or according to the general description. In a particular design, no dedicated cooling container outlet shutter under control of the control unit is present. The control unit may therefore optionally provide a user indication, in particular an optical and/or acoustic indication, upon the end-of-cooling condition being met.

The chaff separator 19' of the coffee roaster 1' includes a cyclone separator 191' for separating the chaff from the exhaust air stream. The cyclone separator 191' may be controlled by the control unit and activated during the roasting process. After leaving the drum outlet 11114, the exhaust air is fed into the cyclone separator 191' in which the chaff is generally separated and moved to a chaff drawer 192' for subsequent disposal. from the cyclone separator 191' the exhaust air is fed to the particle filter which is exemplary realized as an electrostatic particle filter 1 59'. Prior to entering the electrostatic particle filter 1 58', the exhaust air passes a chaff retainer filter 193' which may be realized as mechanical filter, for example as perforated plate and prevents any residual chaff that may have passed the cyclone separator 191 from entering the further downstream components.

The chaff separator 191' has attached thereto a fire extinguisher 194' configured to extinguish a fire in the chaff separator 191' and/orthe chaff drawer 192'. The fire extinguisher 194' is connected to the control unit 13 which controls its activation based on the control unit 13 detecting a condition indicative of a fire. The condition indicative of a fire may be determined using a fire detector. For example, the fire may be detected based on a temperature measured an additional fire temperature sensor, smoke detector, or any other type of fire detector arranged in the fire extinguisher 194' itself, in the chaff separator 191', in the chaff drawer 192', or downstream from the chaff separator 191'.

The exhaust air treatment unit 15' of the coffee roaster 1' includes a catalyzer 1 57b' for the removal of odorous, hazardous, toxic, and/or polluting substances, for example carbon monoxide. To ensure an appropriate temperature of the exhaust air for the catalyzer 157b' to operate efficiently, an exhaust air heater 1 57a' is arranged upstream of the catalyzer 1 57b'. Downstream of the catalyzer 1 57b' an exhaust air cooler 1 57c' is arranged to cool to the generally hot exhaust air exiting the catalyzer 1 57b'. The catalyzer may comprise a catalytic converter as known from vehicle exhaust systems.

In operation, the exhaust air heater 157a' is favorably not operated continually but only in a phase, in particular a late phase of the roasting process as explained further below, when most smell occurs. Otherwise, odorous particles respectively substances are retained by the electrostatic particles filter 1 58'. Operation of the exhaust air heater 1 57a' is controlled by the control unit of the coffee roaster. Typical heating temperatures may, e.g. be in a range of 200° C to 400°C, in particular, 250° C to 300°C, depending on the type and particular characteristics of the catalyzer 1 57b'.

From the exhaust air cooler 157c' as downstream element of the exhaust air treatment unit 15', the exhaust air passes the condenser/dehumidifier 155 and the exhaust air withdrawer 115 and exits the coffee roaster 1' via chimney 1152 as explained before.

As explained before, the cooling air follows the same route as the exhaust air during roasting in the sown design.

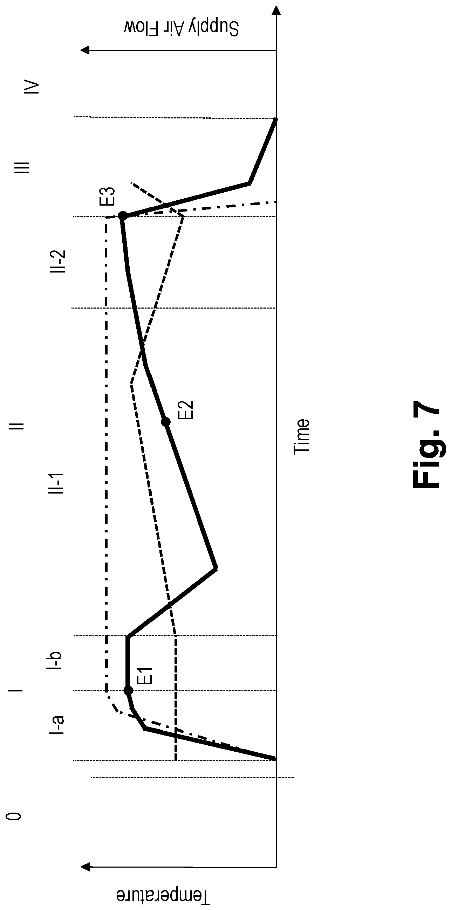

In the following, reference is additionally made to **Figure 7****,** showing a further example for roasting coffee beans and an example a selected roasting profile and/or target roasting profile, generally similar to **Figure 5****.** The shown example is in this form based on a coffee roaster 1' as shown in **Figure 6****.** Since the roasting process is generally carried out in a similar manner as discussed in context of Figure 5 and the course of the roasting bean temperature is also similar, the following description is focused on particular aspects of the embodiment.

In Figure 7, the bold line schematically shows the roasting bean temperature respectively the roasting bean temperature signal as determined by the roasting bean temperature sensor 12a, generally corresponding to or indicating the desired roasting bean temperature according to the selected roasting profile. The dashed-and-dotted line the rear wall 11 111 temperature of the drum 111. Further, Figure 7 shows supply air flow as a dashed line.

In a preparatory phase O, the weight of the coffee beans is determined by the bean scale 16 as explained before. Here, the cooling container 141' serves as bean tray. Phase I is a pre-heating phase where the rear wall 11111 and the air inside the drum 111 are heated to desired target values according to the selected roasting profile. In the shown example, the rear wall temperature is kept substantially constant, which however may not be the case for another selected roasting profile. The pre-heating phase I is here two-parted and includes a pre-heating phase as such 1-1 in which in particular the drum air temperature is heated to a desired value according to the selected roasting profile. As this temperature is reached, indicated with a dot as event E1, the drum air temperature is controlled to be kept generally constant respectively stabilizes in a pre-heating holding phase I-1. At the end of the pre-heating holding phase, the control unit controls the drum inlet shutter 1114 to temporarily open, thereby transferring the coffee beans that have by a user filled into the hopper 1113 after determining the weight into the drum 111. The course of the roasting bean temperature during roasting is in the shown example similar to the example of **Figure 5** as discussed before. The drum rotor drive 1 13 is controlled to rotate the drum rotor 112 in this example with a constant rotational speed, which, however is not mandatory. Instead, the selected roasting profile may include a time-variable profile.

The positive pressure device respectively supply fan 1142 and the air heater 1141, which both have major impact on the drum air temperature are in this example controlled as follows: The supply fan 1142 is controlled in a number of phases to a predetermined air flow and/or a pressure after the supply fan 1142 respectively at the inlet of the drum 111. The air heater 1141 is controlled such that the desired roasting bean temperature as a function of time is achieved. The different phases may be separated respectively a switching between the phases may be time controlled, occur upon the roasting bean temperature assuming a particular roasting bean temperature in accordance with the selected roasting profile and/or a roasting bean color assuming a particular roasting bean color in accordance with the selected roasting profile.

By way of example, at the end of Phase 1-b, the supply fan 1142 is set to 60% of a maximum air flow rate, and the temperature of the supply air is set to 450° C. The temperature as detected by the roasting bean temperature sensor 12a (as indicated by the solid line) drops upon the relatively cold beans entering the drum 111. This results in the temperature indicated by the roasting bean temperature sensor 12a dropping quickly until the temperature indicated by the roasting bean temperature sensor 12a matches a temperature of the beans (which is increasing due to the hot supply air and the hot drum 111). During phase II, the control unit 13 is configured to detect a minimum temperature as indicated by the roasting bean temperature sensor 1 2a. Upon the minimum having been detected, the supply fan 1142 is regulated to 65% of a maximum air flow rate and the temperature of the supply air set to 460° C. From approximately this point onwards, the temperature measured by the roasting bean temperature sensor 12a corresponds well to an actual temperature of the beans. Point E2 is reached once the roasting bean temperature sensor 12a indicates that the beans have reached 193° C. Then supply fan 1142 is set to 40% of a maximum air flow rate and the temperature of the supply air set to 430° C. The specific temperatures indicated in the example described depends on the roasting profile.

The negative pressure device respectively withdrawer fan 1151 is controlled as explained before to ensure a steady air low without back flow. The air flow and/or the pressure at the air inlet and/or the exhaust air withdraw opening 11114 may further be monitored for pre-defined threshold values which may, if exceeded, indicate a malfunction or defective, such as a blocked filter.

In the shown example, the roasting as such is two-parted with a first roasting phase II-1 and a subsequent second roasting phase II-2. In contrast to the first roasting phase II-1, the exhaust air heater 1 57a' is activated to heat the exhaust air to a temperature of e.g. 300° C to allow the catalyzer 157b' to eliminate odorous, hazardous, toxic, and/or polluting substances as explained before in a catalytic process. The start of the second roasting phase II-2 may be initiated for example in dependence of the roasted bean temperature, exemplary at a value of 1 50°C.

The end of roasting condition, indicated as characteristic event E-3, is like in the example of **Figure 5****,** determined by the coffee bean temperature and optionally the coffee bean color assuming respective target values as defined by the selected roasting profile. Further, a time of roasting may define the end of roasting condition, in particular a time of roasting at and/or above a particular temperature. The subsequent steps of cooling, III, and determining the weight of the roasted coffee beans, IV, is carried out as explained before, considering, however, that different design and operation of the cooling unit 15' as compared to the cooling unit 15 and the manual removal of the roasted coffee beans from the cooling container 141'.

### REFERENCE SIGNS

- 1, 1' 1a, 1b, 1c, 1d: coffee roaster
- 11: roasting unit
- 111: drum
- 1111: drum body
- 11111: rear wall (drum body)
- 11112: drum inlet
- 11113: drum outlet
- 11114: exhaust air withdraw opening
- 11115: bean retainer / perforated plate
- 1112: front wall
- 1113: hopper
- 1114: drum inlet shutter
- 1115: drum outlet shutter
- 112: drum rotor
- 113: drum rotor drive
- 114: hot air supply
- 1141: air heater
- 1142: positive pressure device/supply fan
- 115: exhaust air withdrawer
- 1151: negative pressure device / withdrawer fan
- 1152: chimney
- 116: drum heater
- 12a: roasting bean temperature sensor
- 12b: roasting bean color sensor
- 12c: rear wall temperature sensor
- 12d: drum air temperature sensor
- 12e: crack detection sensor / microphone
- 12f: inlet air temperature sensor
- 12g: air humidity sensor
- 12h: air outlet pressure sensor
- 12h2: air inlet pressure sensor
- 12i: cooling bean temperature sensor
- 12j: water temperature sensor
- 12k: exhaust air temperature sensor
- 121: filling level sensor/float gauge
- 12m: tray sensor
- 12n: drawer sensor
- 13: control unit
- 14': cooling unit
- 141, 141': cooling container
- 1411: cooling container inlet
- 1412: cooling container outlet
- 142: cooling rotor
- 143: cooling rotor drive
- 144: cooling air supply / cooling fan
- 145: cooling water supply/nozzle arrangement
- 146: cooling container outlet shutter
- 15, 15': exhaust air treatment unit
- 151: water tank
- 1511: water tank air inlet
- 1512: water tank air outlet
- 152: fresh water supply
- 1521: fresh water supply valve
- 153: waste water drain
- 1531: waste water drain valve
- 154: exhaust air filter
- 155: condenser
- 156: bubble enhancer / chaff separator
- 157a': exhaust air heater
- 157b': catalyzer
- 157c': exhaust air cooler
- 158': (electrostatic) particle filter
- 16: bean scale
- 17: bean tray
- 18: drawer
- 19: chaff separator
- 191': cyclone separator
- 192': chaff drawer
- 193': chaff retainer filter
- 194': fire extinguisher
- 2: remote computer system
- 3a, 3b: user interface device
- F: filling level (water tank)
- A: drum axis

## Claims

1. Coffee roaster (1) for performing a coffee bean roasting process, wherein the coffee roaster (1) includes
a) a roasting unit (11), wherein the roasting unit (11) includes:
- a drum (111), wherein the drum (111) comprises a drum body (1111) with a thermal conductive rear wall (11111) and with a drum inlet (11112) and a drum outlet (11113), and the drum further comprises a removable front wall (1112),
- a drum rotor (112), wherein the drum rotor (112) is rotatable arranged inside the drum (111),
- a drum rotor drive (113) in operative coupling with the drum rotor (112),
- a hot air supply (114), wherein the hot air supply includes an air heater (1141) and a positive pressure device (1142), the positive pressure device including in particular a supply fan, to feed hot air into the drum (111),
- a drum heater (116), wherein the drum heater (116) is thermally coupled with the rear wall (11111),
b) a sensor arrangement, wherein the sensor arrangement includes a roasting bean temperature sensor (12a), wherein the roasting bean temperature sensor (12a) is configured to measure a roasting bean temperature of coffee beans positioned inside the drum (111) and to provide a roasting bean temperature signal,
c) a control unit (13) for controlling execution of the coffee bean roasting process by the coffee roaster (1),
wherein the control unit (13) is configured to receive a control input signal as a function of time, wherein the control input signal includes the roasting bean temperature signal,
wherein the control unit (13) is further configured to automatically generate a control output signal as a function of time in dependence of the control input signal, wherein the control output signal includes a drum heater control signal, a drum rotor drive control signal and at least one of an air heater control signal and/or a positive pressure device control signal, thereby controlling operation of the drum heater (116), the drum rotor drive (113) and at least one of the air heater (1141) and/or of the positive pressure device (1142) to roast the coffee beans inside the drum (111) according to a pre-determined selected roasting profile,
wherein the selected roasting profile includes a desired roasting bean temperature as a function of time and a target roasting bean temperature, wherein the control unit (13) is configured to determine if an end-of-roasting-condition is met, wherein the end-of roasting condition includes the coffee beans inside the drum (111) having the target roasting bean temperature.

2. Coffee roaster (1) according to claim 1, wherein the front wall (1112) is transparent.

3. Coffee roaster (1) according to either of the preceding claims, wherein the sensor arrangement further includes at least one of:
- a roasting bean color sensor (1 2b), wherein the roasting bean color sensor (12b) is configured to measure a roasting bean color of the coffee beans positioned inside the drum and to provide a roasting bean color signal, wherein the control input signal includes the roasting bean color signal,
- a rear wall temperature sensor (12c), wherein the rear wall temperature sensor (12c) is configured to measure a rear wall temperature of the rear wall (11111) and to provide a rear wall temperature signal, wherein the control input signal includes the rear wall temperature signal,
- a drum air temperature sensor (12d), wherein the drum air temperature sensor (12d) is configured to measure a drum air temperature inside the drum (111) and to provide a drum air temperature signal, wherein the control input signal includes the drum air temperature signal,
- an inlet air temperature sensor (12f), wherein the inlet air temperature sensor (12f) is configured to measure an inlet air temperature of hot air that is fed into the drum (111) and to provide an inlet air temperature signal, wherein the control input signal includes the inlet air temperature signal,
- an air humidity sensor (12g), wherein the air humidity sensor (1 2g) is configured to measure a withdrawn air humidity of air that is withdrawn from drum (111) and to provide an air humidity signal, wherein the control input signal includes the air humidity signal,
- an air outlet pressure sensor (1 2h), wherein the air outlet pressure sensor (12h) is configured to measure an air pressure of air that is withdrawn from the drum (111) and to provide an outlet air pressure signal, wherein the control input signal includes the outlet air pressure signal,
- an air inlet pressure sensor (1 2h2), wherein the air inlet pressure sensor (1 2h2) is configured to measure an air pressure of hot air that is fed into the drum (111) and to provide an inlet air pressure signal, wherein the control input signal includes the inlet air pressure signal,- a crack detection sensor (12e), wherein the crack detection sensor (12e) is configured to detect the occurrence of a first and/or second crack of coffee beans during roasting, and provide a crack detection signal, wherein the control input signal includes the crack detection signal.

4. Coffee roaster (1) according to either of the preceding claims, wherein the rear wall (11111) is realized as a sandwich comprising an outer layer in thermal contact with the drum heater (11 6), a core layer of aluminum and a food-grade inner layer.

5. Coffee roaster (1) according to either of the preceding claims, further including a drum inlet shutter (1114), wherein the drum inlet shutter (1114) is arranged to alternatively open or close the drum inlet (11112),
wherein the selected roasting profile includes a selected pre-roasting condition, wherein the control unit (13) is configured
- to generate a pre-roasting control output signal as part of the control output signal,
- to determine, based on control input signal, if the selected pre-roasting condition is met and to control the drum inlet shutter (1114) to open the drum inlet (11112) upon the selected pre-roasting condition being met.

6. Coffee roaster (1) according to either of the preceding claims, further including a drum outlet shutter (1115), wherein the drum outlet shutter (1115) is arranged to alternatively open or close the drum outlet (11113);
wherein the control unit (13) is configured to control the drum outlet shutter (1115) to open the drum outlet (11113) upon the end-of-roasting condition being met.

7. Coffee roaster (1) according to claim 6, further including a cooling unit (14), wherein the cooling unit (14) includes
a) a cooling container (141) with a cooling container inlet (1411), wherein the cooling container inlet (1411) is coupled with the drum outlet (11113) via the drum outlet shutter (1115),
b) a cooling medium supply, wherein the cooling medium supply includes
- a cooling air supply (144), in particular a cooling fan, wherein the cooling air supply (144) is fluidically coupled with an inner cooling container space to feed cooling air into the cooling container (141), and/or
- a cooling water supply (145), wherein the cooling water supply includes a nozzle arrangement, wherein the nozzle arrangement is configured for spraying cooling water onto coffee beans inside the cooling container (141).

8. Coffee roaster (1) according to claim 7, wherein the cooling container (141) is fluidically coupled, in particular in a fluidically tight manner, with an inner drum space of the drum (111), thereby enabling a transfer of cooling air from the cooling container (141) into the drum (111) and a withdrawal of the cooling air from the drum by the exhaust air withdrawer (115).

9. Coffee roaster (1) according to either of the preceding claims, wherein the coffee roaster (1) further includes an exhaust air treatment unit (15, 15'), wherein the exhaust air treatment unit (15, 15') includes a catalyzer (157b'), the catalyzer (157b') being configured to catalyze one or more components of the exhaust air that is withdrawn from the drum.

10. Coffee roaster (1) according to claim 9, wherein the exhaust air treatment unit (15, 15') includes an exhaust air heater (157a'), the exhaust air heater (157a') being arranged fluidically upstream with respect to the catalyzer (1 57b'), and an exhaust air cooler (157c'), the exhaust air cooler (157c') being arranged fluidically downstream with respect to the catalyzer (157b').

11. Coffee roaster (1) according to either of the preceding claims, further including a chaff separator (156, 19), the chaff separator (156, 19) in particular including a cyclone separator.

12. Coffee roaster (1) according to claim 11, further including a fire extinguisher (194') configured to extinguish a fire in the chaff separator (1 56, 19).

13. Coffee roaster (1) according to either of the preceding claims, wherein the control unit (13) is configured to control the positive pressure device (1142), in particular a rotational speed of a supply fan, to vary an airflow of the hot air in dependence of a progress of the roasting process.

14. Coffee roaster (1) according to either of the preceding claims, wherein the control unit (13) is configured for operatively coupling with a remote computer system (2) and to receive the selected roasting profile from the remote computer system (2).

15. Coffee roaster (1) according to claim 14, wherein the control unit (13) is configured to acquire sensor data during coffee bean roasting process to transmit the acquired sensor data and/or data derived from the acquired sensor data to the remote computer system (2).

16. Coffee roasting system, wherein the coffee roasting system includes:
a) a coffee roaster (1) according to any one of claims 14 or 1 5,
b) a remote computer system (2), wherein the remote computer system (2) is configured to store a plurality of available roasting profiles and to receive a user input for selecting the selected roasting profile from the plurality of available roasting profiles and to transmit the selected roasting profile to the control unit (13).

17. Method of roasting coffee beans and/or of brewing coffee, wherein the method includes using a coffee roaster (1) according to any one of claims 1 to 15 and/or a coffee roasting system according to claim 16.

## Patentansprüche

1. Kaffeeröster (1) zur Durchführung eines Röstverfahrens für Kaffeebohnen, wobei der Kaffeeröster (1) umfasst
a) eine Rösteinheit (11), wobei die Rösteinheit (11) umfasst:
- eine Trommel (111), wobei die Trommel (111) einen Trommelkörper (1111) mit einer wärmeleitenden Rückwand (11111) und mit einem Trommeleinlass (11112) und einem Trommelauslass (11113) umfasst, und die Trommel ferner eine herausnehmbare Vorderwand (1112) umfasst,
- einen Trommelrotor (112), wobei der Trommelrotor (112) drehbar innerhalb der Trommel (111) angeordnet ist,
- einen Trommelrotorantrieb (113), der mit dem Trommelrotor (112) betriebsfähig gekoppelt ist,
- eine Heissluftzufuhr (114), wobei die Heissluftzufuhr einen Lufterhitzer (1141) und eine Überdruckvorrichtung (1142) umfasst, wobei die Überdruckvorrichtung insbesondere ein Zufuhrgebläse umfasst, um Heissluft in die Trommel (111) zuzuführen,
- ein Trommelheizer (116), wobei der Trommelheizer (116) thermisch mit der Rückwand (11111) gekoppelt ist,
b) eine Sensoranordnung, wobei die Sensoranordnung einen Röstbohnentemperatursensor (12a) umfasst, wobei der Röstbohnentemperatursensor (12a) konfiguriert ist, eine Röstbohnentemperatur von in der Trommel (111) positionierten Kaffeebohnen zu messen und ein Röstbohnentemperatursignal bereitzustellen,
c) eine Steuereinheit (13) zur Steuerung der Durchführung des Röstvorgangs der Kaffeebohnen mittels des Kaffeerösters (1),
wobei die Steuereinheit (13) konfiguriert ist, ein Steuereingangssignal als eine Funktion der Zeit zu empfangen, wobei das Steuereingangssignal das Röstbohnentemperatursignal umfasst,
wobei die Steuereinheit (13) ferner konfiguriert ist, automatisch ein Steuerausgangssignal als Funktion der Zeit in Abhängigkeit von dem Steuereingangssignal zu erzeugen, wobei das Steuerausgangssignal ein Trommelheizungs-Steuersignal, ein Trommelrotor-Antriebssteuersignal und mindestens eines von einem Lufterhitzer-Steuersignal und/oder einem Überdruckvorrichtungs-Steuersignal umfasst, wodurch der Betrieb des Trommelheizers (116), des Trommelrotor-Antriebs (113) und mindestens eines von dem Lufterhitzer (1141) und/oder der Überdruckvorrichtung (1142) gesteuert wird, um die Kaffeebohnen innerhalb der Trommel (111) gemäss einem vorbestimmten ausgewählten Röstprofil zu rösten,
wobei das ausgewählte Röstprofil eine gewünschte Röstbohnentemperatur als eine Funktion der Zeit und eine Soll-Röstbohnentemperatur umfasst, wobei die Steuereinheit (13) konfiguriert ist, zu bestimmen, ob eine Röstende-Bedingung erfüllt ist, wobei die Röstende-Bedingung die Kaffeebohnen innerhalb der Trommel (111) mit der Soll-Röstbohnentemperatur umfasst.

2. Kaffeeröster (1) gemäss Anspruch 1, wobei die Vorderwand (1112) transparent ist.

3. Kaffeeröster (1) gemäss einem der vorangehenden Patentansprüche, wobei die Sensoranordnung ferner mindestens eines der folgenden Elemente umfasst:
- einen Röstbohnenfarbsensor (12b), wobei der Röstbohnenfarbsensor (12b) konfiguriert ist, eine Röstbohnenfarbe der in der Trommel positionierten Kaffeebohnen zu messen und ein Röstbohnenfarbsignal bereitzustellen, wobei das Steuereingangssignal das Röstbohnenfarbsignal umfasst,
- einen Rückwandtemperatursensor (12c), wobei der Rückwandtemperatursensor (1 2c) konfiguriert ist, eine Rückwandtemperatur der Rückwand (11111) zu messen und ein Rückwandtemperatursignal bereitzustellen, wobei das Steuereingangssignal das Rückwandtemperatursignal umfasst,
- einen Trommellufttemperatursensor (12d), wobei der Trommellufttemperatursensor (12d) konfiguriert ist, eine Trommellufttemperatur innerhalb der Trommel (111) zu messen und ein Trommellufttemperatursignal bereitzustellen, wobei das Steuereingangssignal das Trommellufttemperatursignal umfasst,
- einen Einlasslufttemperatursensor (12f), wobei der Einlasslufttemperatursensor (12f) konfiguriert ist, eine Einlasslufttemperatur von Heissluft zu messen, die in die Trommel (111) zugeführt wird, und ein Einlasslufttemperatursignal bereitzustellen, wobei das Steuereingangssignal das Einlasslufttemperatursignal umfasst,
- einen Luftfeuchtigkeitssensor (12g), wobei der Luftfeuchtigkeitssensor (12g) konfiguriert ist, eine entzogene Luftfeuchtigkeit von Luft zu messen, die aus der Trommel (111) entzogen wird, und ein Luftfeuchtigkeitssignal bereitzustellen, wobei das Steuereingangssignal das Luftfeuchtigkeitssignal umfasst,
- einen Luftauslassdrucksensor (12h), wobei der Luftauslassdrucksensor (12h) konfiguriert ist, einen Luftdruck von Luft zu messen, die aus der Trommel (111) entzogen wird, und ein Auslassluftdrucksignal bereitzustellen, wobei das Steuereingangssignal das Auslassluftdrucksignal umfasst,
- einen Lufteinlassdrucksensor (12h2), wobei der Lufteinlassdrucksensor (12h2) konfiguriert ist, einen Luftdruck von Heissluft zu messen, die in die Trommel (111) zugeführt wird, und ein Lufteinlassdrucksignal bereitzustellen, wobei das Steuereingangssignal das Lufteinlassdrucksignal umfasst,
- einen Risserkennungssensor (12e), wobei der Risserkennungssensor (12e) konfiguriert ist, das Auftreten eines ersten und/oder zweiten Risses von Kaffeebohnen während des Röstens zu erkennen und ein Risserkennungssignal bereitzustellen, wobei das Steuereingangssignal das Risserkennungssignal umfasst.

4. Kaffeeröster (1) gemäss einem der vorhergehenden Ansprüche, wobei die Rückwand (11111) als Sandwich ausgeführt ist, das eine Aussenschicht in thermischem Kontakt mit dem Trommelheizer (116), eine Kernschicht aus Aluminium und eine Lebensmittel Innenschicht umfasst.

5. Kaffeeröster (1) gemäss einem der vorhergehenden Ansprüche ferner umfassend einen Trommeleinlassverschluss (1114), wobei der Trommeleinlassverschluss (1114) angeordnet ist, um den Trommeleinlass (11112) alternativ zu öffnen oder zu schliessen,
wobei das ausgewählte Röstprofil eine ausgewählte Vorröstbedingung umfasst, wobei die Steuereinheit (13) so konfiguriert ist,
- ein Vorröst-Steuerausgangssignal als Teil des Steuerausgangssignals zu erzeugen,
- auf der Grundlage des Steuereingangssignals zu bestimmen, ob die ausgewählte Vorröstbedingung erfüllt ist, und den Trommeleinlassverschluss (1114) zu steuern, um den Trommeleinlass (11112) zu öffnen, wenn die ausgewählte Vorröstbedingung erfüllt ist.

6. Kaffeeröster (1) gemäss einem der vorhergehenden Ansprüche, ferner umfassend einen Trommelauslassverschluss (1115), wobei der Trommelauslassverschluss (1115) angeordnet ist, um den Trommelauslass (11113) alternativ zu öffnen oder zu schliessen;
wobei die Steuereinheit (13) zur Steuerung des Trommelauslassverschlusses (1115) konfiguriert ist, den Trommelauslass (11113) zu öffnen, wenn die Bedingung für das Ende des Röstvorgangs erfüllt ist.

7. Kaffeeröster (1) gemäss Anspruch 6, ferner umfassend eine Kühleinheit (14), wobei die Kühleinheit (14) umfasst
a. einen Kühlbehälter (141) mit einem Kühlbehältereinlass (1411), wobei der Kühlbehältereinlass (1411) mit dem Trommelauslass (11113) via Trommelauslassverschluss (1115) gekoppelt ist,
b. eine Kühlmittelzufuhr, wobei die Kühlmittelzufuhr umfasst
- eine Kühlluftzufuhr (144), insbesondere ein Kühlgebläse, wobei die Kühlluftzufuhr (144) strömungstechnisch mit einem Kühlbehälterinnenraum gekoppelt ist, um Kühlluft in den Kühlbehälter (141) einzuspeisen, und/oder
- eine Kühlwasserversorgung (145), wobei die Kühlwasserversorgung eine Düsenanordnung umfasst, wobei die Düsenanordnung zum Sprühen von Kühlwasser auf Kaffeebohnen innerhalb des Kühlbehälters (141) konfiguriert ist.

8. Kaffeeröster (1) gemäss Anspruch 7, wobei der Kühlbehälter (141) mit einem Trommelinnenraum der Trommel (111) fluidisch, insbesondere fluidisch dichtend, gekoppelt ist, wodurch ein Übergang von Kühlluft aus dem Kühlbehälter (141) in die Trommel (111) und eine Ausführung der Kühlluft aus der Trommel durch den Abluftentnehmer (115) ermöglicht wird.

9. Kaffeeröster (1) gemäss einem der vorhergehenden Ansprüche, wobei der Kaffeeröster (1) ferner eine Abluftbehandlungseinheit (15, 15') umfasst, wobei die Abluftbehandlungseinheit (15, 15') einen Katalysator (157b') umfasst, wobei der Katalysator (157b') konfiguriert ist, eine oder mehrere Komponenten der Abluft, die aus der Trommel abgezogen wird, zu katalysieren.

10. Kaffeeröster (1) gemäss Anspruch 9, wobei die Abluftbehandlungseinheit (15, 15') einen Ablufterhitzer (1 57a') umfasst, wobei der Ablufterhitzer (1 57a') strömungstechnisch stromaufwärts in Bezug auf den Katalysator (157b') angeordnet ist, und einen Abluftkühler (157c'), wobei der Abluftkühler (157c') strömungstechnisch stromabwärts in Bezug auf den Katalysator (1 57b') angeordnet ist.

11. Kaffeeröster (1) gemäss einem der vorhergehenden Ansprüche, ferner umfassend einen Spreuabscheider (156, 19), wobei der Spreuabscheider (156, 19) insbesondere einen Zyklonabscheider umfasst.

12. Kaffeeröster (1) gemäss Anspruch 11,ferner umfassend einen Feuerlöscher (194'), der konfiguriert ist, ein Feuer im Spreuabscheider (156, 19) zu löschen.

13. Kaffeeröster (1) gemäss einem der vorhergehenden Ansprüche, wobei die Steuereinheit (13) zur Steuerung der Überdruckvorrichtung (1142), insbesondere einer Drehzahl eines Zuluftgebläses, konfiguriert ist, einen Luftstrom der Heissluft in Abhängigkeit von einem Vorgang des Röstvorgangs zu variieren.

14. Kaffeeröster (1) gemäss einem der vorhergehenden Ansprüche, wobei die Steuereinheit (13) konfiguriert ist, betriebsfähig mit einem entfernten Computersystem (2) gekoppelt zu sein und das ausgewählte Röstprofil von dem entfernten Computersystem (2) zu empfangen.

15. Kaffeeröster (1) nach Anspruch 14, wobei die Steuereinheit (13) konfiguriert ist, während des Röstvorgangs von Kaffeebohnen Sensordaten zu erfassen, um die erfassten Sensordaten und/oder aus den erfassten Sensordaten abgeleitete Daten an das entfernte Computersystem (2) zu übertragen.

16. Kaffeeröstsystem, wobei das Kaffeeröstsystem folgendes umfasst:
a. einen Kaffeeröster (1) gemäss einem der Ansprüche 14 oder 1 5,
b. ein ferngesteuertes Computersystem (2), wobei das ferngesteuerte Computersystem (2) konfiguriert ist, eine Vielzahl von verfügbaren Röstprofilen zu speichern und eine Benutzereingabe zur Auswahl des ausgewählten Röstprofils aus der Vielzahl von verfügbaren Röstprofilen zu empfangen und das ausgewählte Röstprofil an die Steuereinheit (13) zu übermitteln.

17. Verfahren zum Rösten von Kaffeebohnen und/oder zum Zubereiten von Kaffee, wobei das Verfahren die Verwendung eines Kaffeerösters (1) gemäss einem der Ansprüche 1 bis 1 5 und/oder eines Kaffeeröstsystems gemäss Anspruch 16 umfasst.

## Revendications

1. Torréfacteur de café (1) pour effectuer un processus de torréfaction de grains de café, dans lequel le torréfacteur de café (1) comprend
a. une unité de torréfaction (11), dans laquelle l'unité de torréfaction (11) comprend :
- un tambour (111), dans lequel le tambour (111) comprend un corps de tambour (1111) avec une paroi arrière (11111) conductrice de chaleur et avec une entrée de tambour (11112) et une sortie de tambour (11113), et le tambour comprend en outre une paroi avant (1112) amovible,
- un rotor de tambour (112), dans lequel le rotor de tambour (112) est rotatif et arrangé à l'intérieur du tambour (111),
- une transmission de rotor de tambour (113) en couplage opérationnel avec le rotor de tambour (112),
- une alimentation en air chaud (114), dans laquelle l'alimentation en air chaud comprend un réchauffeur d'air (1141) et un dispositif de pression positive (1142), le dispositif de pression positive comprenant notamment un ventilateur d'alimentation, pour alimenter le tambour (111) en air chaud,
- un réchauffeur de tambour (116), dans lequel le réchauffeur de tambour (116) est couplé thermiquement avec la paroi arrière (11111),
b. un dispositif de capteurs, dans lequel le dispositif de capteurs inclut un capteur de température de grains de torréfaction (12a), dans lequel le capteur de température de grains de torréfaction (12a) est configuré pour mesurer une température de grains de torréfaction de grains de café positionnés à l'intérieur du tambour (111) et pour fournir un signal de température de grains de torréfaction,
c. une unité de contrôle (13) pour commander l'exécution du processus de torréfaction des grains de café par le torréfacteur de café (1),
dans laquelle l'unité de contrôle (13) est configurée pour recevoir un signal d'entrée de commande en fonction du temps, dans laquelle le signal d'entrée de commande comprend le signal de température des grains de café,
dans laquelle l'unité de contrôle (13) est en outre configurée pour générer automatiquement un signal de sortie de contrôle en fonction du temps en fonction du signal d'entrée de contrôle, dans laquelle le signal de sortie de contrôle inclut un signal de contrôle du chauffage du tambour, un signal de contrôle de l'entraînement du rotor du tambour et au moins un signal de contrôle du chauffage de l'air et/ou un signal de contrôle du dispositif de pression positive, configurant ainsi le fonctionnement du réchauffeur de tambour (116), de l'entraînement du rotor du tambour (113) et au moins un du réchauffeur d'air (1141) et/ou du dispositif de pression positive (1142) pour torréfier les grains de café à l'intérieurdu tambour (111) selon un profil de torréfaction sélectionné préétabli,
dans lequel le profil de torréfaction sélectionné comprend une température de grain de torréfaction souhaitée en fonction du temps et une température de grain de torréfaction cible,
dans lequel l'unité de contrôle (13) est configurée pour déterminer si une condition de fin de torréfaction est remplie, dans lequel la condition de fin de torréfaction comprend les grains de café à l'intérieur du tambour (111) ayant la température cible des grains de torréfaction.

2. Torréfacteur de café (1) selon la revendication 1, dans laquelle la paroi avant (1112) est transparente.

3. Torréfacteur de café (1) selon l'une des revendications précédentes, dans lequel le dispositif de capteurs comprend en outre au moins l'un parmi :
- un capteur de couleur de grain de torréfaction (12b), dans lequel le capteur de couleur de grain de torréfaction (12b) est configuré pour mesurer une couleur de grain de torréfaction des grains de café positionnés à l'intérieur du tambour et pour fournir un signal de couleur de grain de torréfaction, dans lequel le signal d'entrée de commande comprend le signal de couleur de grain de torréfaction,
- un capteur de température de paroi arrière (12c), dans lequel le capteur de température de paroi arrière (12c) est configuré pour mesurer une température de paroi arrière de la paroi arrière (11111) et pour fournir un signal de température de paroi arrière, dans lequel le signal d'entrée de commande comprend le signal de température de paroi arrière,
- un capteur de température de l'air du tambour (12d), dans lequel le capteur de température de l'air du tambour (12d) est configuré pour mesurer une température de l'air du tambour à l'intérieur du tambour (111) et pour fournir un signal de température de l'air du tambour, le signal d'entrée de commande comprenant le signal de température de l'air du tambour,
- un capteur de température d'air d'entrée (12f), dans lequel le capteur de température d'air d'entrée (12f) est configuré pour mesurer une température d'air d'entrée de l'air chaud qui est introduit dans le tambour (111) et pour fournir un signal de température d'air d'entrée, dans lequel le signal d'entrée de commande comprend le signal de température d'air d'entrée,
- un capteur d'humidité de l'air (12g), dans lequel le capteur d'humidité de l'air (12g) est configuré pour mesurer l'humidité de l'air retiré du tambour (111) et pour fournir un signal d'humidité de l'air, dans lequel le signal d'entrée de commande comprend le signal d'humidité de l'air,
- un capteur de pression de sortie d'air (1 2h), dans lequel le capteur de pression de sortie d'air (12h) est configuré pour mesurer une pression d'air de l'air qui est retiré du tambour (111) et pour fournir un signal de pression d'air de sortie, dans lequel le signal d'entrée de commande comprend le signal de pression d'air de sortie,
- an un capteur de pression d'entrée d'air (12h2), dans lequel le capteur de pression d'entrée d'air (12h2) est configuré pour mesurer une pression d'air de l'air chaud qui est introduit dans le tambour (111) et pour fournir un signal de pression d'air d'entrée, dans lequel le signal d'entrée de commande comprend le signal de pression d'air d'entrée,
- un capteur de détection de fissures (12e), dans lequel le capteur de détection de fissures (12e) est configuré pour détecter l'apparition d'une première et/ou d'une deuxième fissure des grains de café pendant la torréfaction, et pour fournir un signal de détection de fissures, le signal d'entrée de commande comprenant le signal de détection de fissures.

4. Torréfacteur de café (1) selon l'une des revendications précédentes, dans lequel la paroi arrière (11111) est réalisée sous forme de sandwich comprenant une couche extérieure en contact thermique avec le dispositif de réchauffeur de tambour (116), une couche centrale en aluminium et une couche intérieure de qualité alimentaire.

5. Torréfacteur de café (1) selon l'une des revendications précédentes, comprenant en outre un obturateur d'entrée de tambour (1114), dans lequel l'obturateur d'entrée de tambour (1114) est arrangé pour ouvrir ou fermer alternativement l'entrée de tambour (11112),
dans laquelle le profil de torréfaction sélectionné comprend une condition de torréfaction sélectionnée, dans laquelle l'unité de contrôle (13) est configurée
- pour générer un signal de sortie de commande de préchauffage dans le cadre du signal de sortie de commande,
- pour déterminer, sur la base du signal d'entrée de commande, si la condition de pré-cuisson sélectionnée est remplie et pour commander l'obturateur d'entrée du tambour (1114) afin d'ouvrir l'entrée du tambour (11112) lorsque la condition de pré-cuisson sélectionnée est remplie.

6. Torréfacteur de café (1) selon l'une des revendications précédentes, comprenant en outre un obturateur de sortie de tambour (1115), dans lequel l'obturateur de sortie de tambour (1115) est arrangé pour ouvrir ou fermer alternativement la sortie de tambour (11113);
dans laquelle l'unité de contrôle (13) est configurée pour commander l'obturateur de sortie du tambour (1115) afin d'ouvrir la sortie du tambour (11113) lorsque la condition de fin de torréfaction est remplie.

7. Torréfacteur de café (1) selon la revendication 6, comprenant en outre une unité de refroidissement (14), dans laquelle l'unité de refroidissement (14) comprend
a) un conteneur de refroidissement (141) avec une entrée de conteneur de refroidissement (1411), dans laquelle l'entrée de conteneur de refroidissement (1411) est couplée avec la sortie du tambour (11113) via l'obturateur de sortie du tambour (1115),
b) une alimentation en agent réfrigérant, dans laquelle l'alimentation en agent réfrigérant comprend
- une alimentation en air de refroidissement (144), en particulier un ventilateur de refroidissement, dans laquelle l'alimentation en air de refroidissement (144) est couplée fluidiquement à un espace intérieur du conteneur de refroidissement pour alimenter en air de refroidissement le conteneur de refroidissement (141), et/ou
- une alimentation en eau de refroidissement (145), dans laquelle l'alimentation en eau de refroidissement comprend un arrangement de buses, dans lequel l'arrangement de buses est configuré pour pulvériser de l'eau de refroidissement sur les grains de café à l'intérieur du conteneur de refroidissement (141).

8. Torréfacteur de café (1) selon la revendication 7, dans lequel le conteneur de refroidissement (141) est couplé fluidiquement, en particulier de manière étanche, avec un espace intérieur du tambour (111), permettant ainsi un transfert d'air de refroidissement du conteneur de refroidissement (141) dans le tambour (111) et un retrait de l'air de refroidissement du tambour par l'extracteur d'air d'échappement (115).

9. Torréfacteur de café (1) selon l'une des revendications précédentes, dans lequel le torréfacteur de café (1) comprend en outre une unité de traitement de l'air vicié (15, 15'), dans laquelle l'unité de traitement de l'air vicié (15, 15') comprend un catalyseur (157b'), le catalyseur (157b') étant configuré pour catalyser un ou plusieurs composants de l'air d'échappement qui est retiré du tambour.

10. Torréfacteur de café (1) selon la revendication 9, dans lequel l'unité de traitement de l'air vicié (15, 15') comprend un réchauffeur d'air vicié (157a'), le réchauffeur d'air vicié (157a') étant arrangé fluidiquement en amont par rapport au catalyseur (157b'), et un refroidisseur d'air vicié (157c'), le refroidisseur d'air vicié (157c') étant arrangé fluidiquement en aval par rapport au catalyseur (157b').

11. Torréfacteur de café (1) selon l'une des revendications précédentes, comprenant en outre un séparateur de paillettes (156, 19), le séparateur de paillettes (156, 19) comprenant en particulier un séparateur à cyclone.

12. Torréfacteur de café (1) selon la revendication 11, comprenant en outre un extincteur (194') configuré pour éteindre un incendie dans le séparateur de paillettes (156, 19).

13. Torréfacteur de café (1) selon l'une des revendications précédentes, dans lequel l'unité de contrôle (13) est configurée pour contrôler le dispositif de pression positive (1142), en particulier une vitesse de rotation d'un ventilateur d'alimentation, pour faire varier un flux d'air chaud en fonction d'un avancement du processus de torréfaction.

14. Torréfacteur de café (1) selon l'une des revendications précédentes, dans lequel l'unité de contrôle (13) est configurée pour se coupler de manière opérationnelle avec un système informatique distant (2) et pour recevoir le profil de torréfaction sélectionné en provenance du système informatique distant (2).

15. Torréfacteur de café (1) selon la revendication 14, dans lequel l'unité de contrôle (13) est configurée pour acquérir des données de capteur pendant le processus de torréfaction des grains de café pour transmettre les données de capteur acquises et/ou les données dérivées des données de capteur acquises au système informatique distant (2).

16. Système de torréfaction de café, dans lequel le système de torréfaction de café comprend :
a. un torréfacteur de café (1) selon l'une des revendications 14 ou 15,
b. un système informatique distant (2), dans lequel le système informatique distant (2) est configuré pour stocker une pluralité de profils de torréfaction disponibles et pour recevoir une entrée de l'utilisateur pour sélectionner le profil de torréfaction sélectionné parmi la pluralité de profils de torréfaction disponibles et pour transmettre le profil de torréfaction sélectionné à l'unité de contrôle (13).

17. Procédé de torréfaction de grains de café et/ou de préparation de café, selon lequel le procédé comprend l'utilisation d'un torréfacteur de café (1) selon l'une des revendications 1 à 15 et/ou d'un système de torréfaction de café selon la revendication 16.
